# EUROPEAN PATENT SPECIFICATION

(11) **EP 3 601 115 B1**
(45) Date of publication and mention of the grant of the patent: **06.11.2024**
(21) Application number: 18711347.7
(22) Date of filing: 19.03.2018
(51) Int. Cl.: B65G 21/20

(54) **GUIDE STRUCTURE FOR CHAIN FOR ARTICLE CONVEYOR**
FÜHRUNGSSTRUKTUR FÜR KETTE FÜR ARTIKELFÖRDERER
STRUCTURE DE GUIDAGE DE CHAÎNE POUR TRANSPORTEUR D'ARTICLES

(30) Priority: 20.03.2017 IT 201700030510
(43) Date of publication of application: 05.02.2020
(73) Proprietor: Rexnord Flattop Europe S.r.l., 42015 Correggio (RE) (IT)
(72) Inventor: ANDREOLI, Andrea, 41123 Modena (MO) (IT)
(74) Representative: V.O.
(86) International application number: PCT/EP2018/056901
(87) International publication number: WO 2018/172290

(56) References cited:
- EP-A1- 0 903 307
- EP-A1- 0 916 599
- WO-A1-2016/131879
- US-A- 5 732 814

## Description

### Field of the invention

The present invention relates to a guide structure for guiding one or more chains of an article conveyor.

### Prior-Art Discussion

An article conveyor typically comprises a movable closed-loop support element adapted to support the articles to be conveyed, and drive elements (for example, electric motors, pinions and cogwheels) for moving the support element along a predefined path (thereby allowing the articles supported thereon to be conveyed).

A common type of conveyor makes use of one or more chains as support element, which typically is configured in such a way to flex/bend upward and downward (for example, so as to be moved around pinions and cogwheels), and to curve rightward and leftward along conveying path.

Along specific sections of the conveying path, such as non-rectilinear forward and/or return sections of the conveying path (for example, along a curve), the article conveyors are typically provided with forward and/or return guide structures for guiding the chain/chains in a smooth and stable manner. Each guide structure typically comprises one or more guide channels, each guide channel being intended to guide a respective chain.

In view of the great variety of the required number of guide channels it is currently common to mill a slab of a low-friction, wear resistant plastic material, such as for example UHMWPE, so that the required guide channels remain.

EP0903307 discloses a magnetic guide for a chain conveyor comprising a U-shaped member made of a low-friction, wear resistant plastic material, having a guide channel, and a base member, made of a relatively low cost material, on which the U-shaped member is assembled.

WO 2016/131879 A1 discloses a guide for a chain comprising a magnetic return guide comprising magnetic interaction means configured to, in use, cause magnetic attraction of the chain within the magnetic return guide.

EP 0 916 599 A1 discloses a a magnetic guide structure for a chain for an article conveyor, said guide structure comprising a guide portion for guiding the chain along a first direction identifying a direction of movement of the chain, wherein the guide portion has a guide portion first surface that, in use, faces the chain, and a guide portion second surface opposite the guide portion first surface, and wherein the guide portion comprises at least two rails each one extending, along a second direction orthogonal to the first direction, from the guide portion first surface to a guide portion third surface that, in use, faces the chain, each pair of rails delimiting, along a third direction orthogonal to the first and second directions, a respective guide channel for at least partly accommodating the chain, each guide channel having side walls formed by side walls of said pair of rails and a bottom wall forming said first surface, and a base portion for supporting the guide portion, the base portion having a base portion first surface that, in use, faces the guide portion second surface, and a base portion second surface opposite said base portion first surface, wherein the base portion is made of a first material and the guide portion is made of a second material different from the first material, wherein the guide structure further comprises fastening means for fastening the guide portion and the base portion to each other at one or more of said at least two rails.

### Summary of the Invention

The Applicant has noticed that the known solutions of guide structures, although saving on material costs, require significantly increased costs for assembly and machining.

Considering for example EP0903307, the Applicant has found that the need of reinforcing members, in the form of teeth, intended to prevent bending of the U-shaped member upon screwing on the base member, involves complex and costly machining. In fact, in order to manufacture the U-shaped member and the teeth, the solution of EP0903307 requires multiple positioning and complex machining of the slab of material at both top and bottom sides thereof.

In addition, since the U-shaped member and the teeth are made by removal of material from a slab, waste of material is significant. This issue is exacerbated by the fact that a relatively expensive material is used for the U-shaped member.

The Applicant has devised a solution of guide structures for chains for article conveyors able to overcome the above-mentioned, as well as other, issues.

In particular, one or more aspects of the present invention are indicated in the independent claims, with advantageous features of the same invention that are indicated in the dependent claims, whose text is incorporated herein *verbatim* by reference.

More specifically, the present invention proposes a guide structure according to independent claim 1. The guide structure is for a chain for an article conveyor. The guide structure comprises a guide portion for guiding the chain along a first direction identifying a direction of movement of the chain. The guide portion has a guide portion first surface that, in use, faces the chain, and a guide portion second surface opposite the guide portion first surface. The guide portion comprises at least two rails each one extending, along a second direction orthogonal to the first direction, from the guide portion first surface to a guide portion third surface that, in use, faces the chain, each pair of rails delimiting, along a third direction orthogonal to the first and second directions, a respective guide channel for at least partly accommodating the chain. Each guide channel has side walls formed by side walls of said pair of rails and a bottom wall forming said first surface. The guide structure also comprises a base portion for supporting the guide portion. The base portion has a base portion first surface that, in use, faces the guide portion second surface, and a base portion second surface opposite said base portion first surface. The base portion is made of a first material and the guide portion is made of a second material different from the first material. The guide structure further comprises fastening means for fastening the guide portion and the base portion to each other at one or more of said at least two rails. The guide portion comprises holes extending, along the second direction, into the rails between the first and third surfaces of the guide portion. Said fastening means is adapted to be fitted into said holes and into the base portion for allowing the guide portion to be fastened to the base portion. The holes of the guide portion comprise through holes opening to both said first and third surfaces of the guide portion.

According to an embodiment of the present invention, the base portion comprises holes extending into the base portion between the base portion first and second surfaces. Preferably, upon superposition of the guide portion second surface to the base portion first surface, holes of the guide portion match respective holes of the base portion. More preferably, and according to dependent claim 2, said fastening means is adapted to be fitted further into the holes of the base portion for allowing the guide portion to be fastened to the base portion.

According to an embodiment of the present invention, and according to dependent claim 3, said holes of the base portion comprise through holes opening to both said first and second surfaces of the base portion.

According to an embodiment of the present invention, and according to dependent claim 4, the base portion comprises at least one seat for housing magnetic interaction means of the guide structure adapted in use to magnetically interact with magnetic interaction means of the chain to cause a magnetic attraction of the chain to the guide structure.

According to an embodiment of the present invention, the guide structure is a return guide structure for guiding the chain along at least a portion of a return section of the conveyor path of the article conveyor. Said at least one seat preferably extends from the base portion first surface towards the base portion second surface. More preferably, and according to dependent claim 5, upon fastening of the guide portion to the base portion said guide portion covers the at least one seat thereby preventing liquids, sludge and dirt from contacting the magnetic interaction means housed therein.

According to an embodiment of the present invention, said magnetic interaction means of the guide structure comprises at least one pair of permanent magnets magnetically coupled to a plate in ferromagnetic material. Preferably, and according to dependent claim 6, each pair of permanent magnets and the respective plate in ferromagnetic material define a horseshoe magnet.

According to an embodiment of the present invention, the guide structure is a forward guide structure for guiding the chain along at least a portion of a forward section of the conveyor path of the article conveyor. Said at least one seat preferably extends from the base portion second surface towards the base portion first surface. Preferably, and according to dependent claim 7, the guide structure further comprises at least one lid for closing the at least one seat thereby preventing liquids, sludge and dirt from contacting the magnetic interaction means housed therein and the magnetic interaction means housed therein from falling down. More preferably, the at least one lid is a removable lid.

According to an embodiment of the present invention, said magnetic interaction means of the guide structure comprises at least one pair of permanent magnets. Said lid is advantageously made of ferromagnetic material. Preferably, and according to dependent claim 8, each pair of permanent magnets and the lid of ferromagnetic material define a horseshoe magnet.

According to an embodiment of the present invention, the guide structure further comprises a further guide portion, preferably made of the second material, having a further guide portion first surface that, in use, faces the chain, and a further guide portion second surface opposite the further guide portion first surface. The further guide portion preferably comprises at least two rails each one extending, along the second direction, from the further guide portion first surface to a further guide portion third surface that, in use, faces the chain. Each pair of rails preferably delimit, along the third direction, a respective guide channel for at least partly accommodating the chain. Preferably, the base portion is also arranged for supporting the further guide portion, the base portion second surface facing, in use, the further guide portion second surface. More preferably, and according to dependent claim 9, the guide structure comprises further fastening means for fastening the further guide portion and the base portion to each other at said at least two rails of the further guide portion.

According to an embodiment of the present invention, the base portion comprises at least two further rails each one extending, along the second direction, from the base portion second surface to a base portion third surface. Each pair of rails preferably delimit, along the third direction, a respective guide channel for at least partly accommodating the chain. Said at least two further rails are preferably formed in a single piece with the base portion. Preferably, and according to dependent claim 10, the fastening means fasten the guide portion and the base portion to each other at said at least two rails of the guide portion and at said at least two further rails of the base portion.

According to an embodiment of the present invention, and according to dependent claim 11, the second material has a coefficient of friction lower than the coefficient of friction of the first material, and/or a wear resistance higher than the wear resistance of the first material.

According to an embodiment of the present invention, and according to dependent claim 12, the guide portion second surface is a flat surface.

### Brief Description of the Figure

One or more embodiments of the present invention, as well as further features and the related advantages, will be better understood with reference to the following detailed description, given purely by way of non-limitative example only, to be read in conjunction with the accompanying figures (wherein corresponding elements are indicated with the same or similar references and their explanation is not repeated for the sake of brevity). In particular:
**Figure 1A** shows a perspective exploded view of a forward guide structure for an article conveyor according to an embodiment of the present invention;
**Figures 1B****,** **1C** and **1D** show a perspective view, a close-up perspective partially-exploded view and a sectional front view, respectively, of said forward guide structure according to an embodiment of the present invention;
**Figures 1E** and **1F** show bottom and top perspective views, respectively, of a guide portion of said forward guide structure according to an embodiment of the present invention;
**Figures 1G** and **1H** show top and bottom perspective views, respectively, of a base portion of said forward guide structure according to an embodiment of the present invention;
**Figures 2A** and **2B** show a perspective view and a close-up perspective exploded view, respectively, of a return guide structure for an article conveyor according to an embodiment of the present invention;
**Figures 2C** and **2D** show bottom and top perspective views, respectively, of a base portion of said return guide structure according to an embodiment of the present invention;
**Figure 2E** shows top and bottom perspective views, respectively, of a guide portion of said return guide structure according to an embodiment of the present invention;
**Figures 3A** and **3B** show a perspective partly exploded view and a perspective exploded view, respectively, of a forward and return guide structure for an article conveyor according to an embodiment of the present invention;
**Figure 3C** show a perspective sectional view of said forward and return guide structure;
**Figure 3D** shows a perspective sectional view of a base portion of said forward and return guide structure according to an embodiment of the present invention;
**Figures 4A** and **4B** show a perspective view and a perspective exploded view, respectively, of a forward and return guide structure for an article conveyor according to another embodiment of the present invention;
**Figure 4C** shows a perspective view of a base portion of said forward and return guide structure according to an embodiment of the present invention, and
**Figure 4D** shows a perspective sectional view of said forward and return guide structure.

### Description of Embodiments of the Invention

With references to the drawings, guides structures for an article conveyor according to embodiments of the present invention are shown.

In the following, directional terminology (for example, top, bottom, upper, lower, side, central, longitudinal, transverse, vertical) associated with the guide structures and components thereof will be used in relation to the intended orientation of use (i.e., the orientation upon installation and operation of an article conveyor comprising such guide structures).

The article conveyor, not shown, typically comprises one or more movable chains, briefly discussed later on by referring only to functional elements deemed relevant for the understanding of the present invention, drive elements (for example, electric motors, pinions and cogwheels, not shown) for moving/driving the chain(s) along a predefined path (i.e. along a respective forward - for example, upper - section that allows the articles to be conveyed, and/or along a respective return - for example, lower - section), and a guide structure for guiding the chain(s) along said path.

In the following, embodiments of the present invention will be discussed by making explicit reference to curved guide structures. This exemplification descends from the fact that typically the guide structures are intended to perform their functions in path portions in which chain instability is expected, such as, for instance, in curved path portions. In any case, the principles of the present invention equivalently apply to straight guide structures.

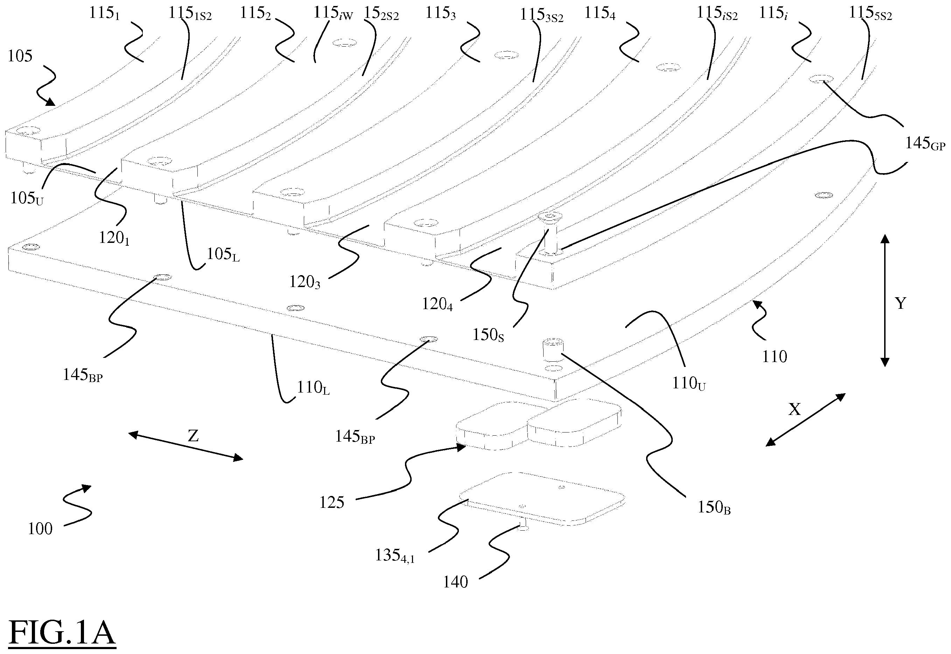

With reference first to **Figure 1A****,** it shows a perspective exploded view of a guide structure 100 for guiding chains along the forward section (thus referred to as forward guide structure hereinafter), according to an embodiment of the present invention.

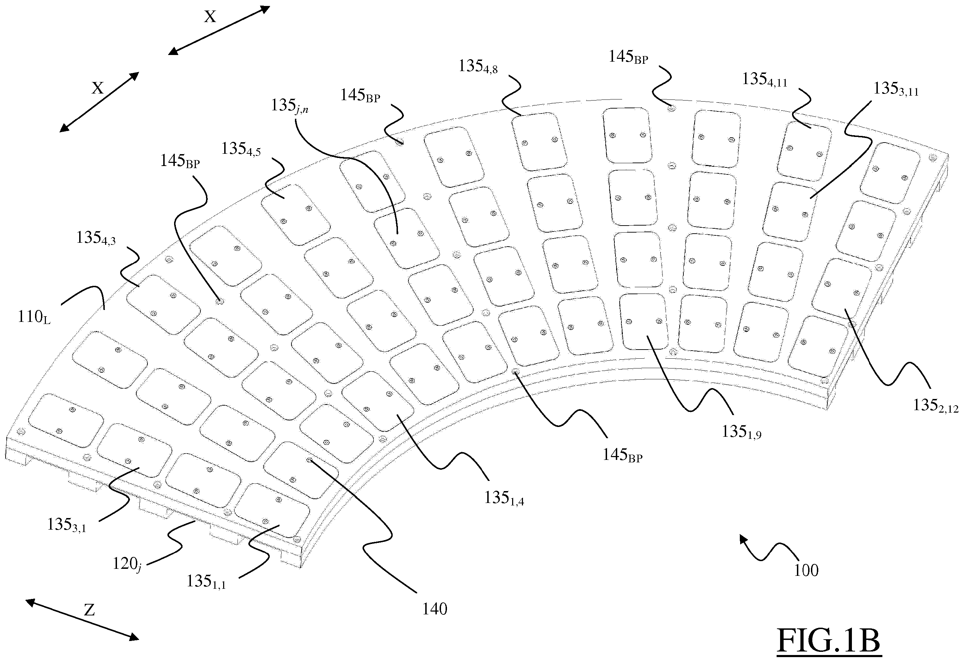

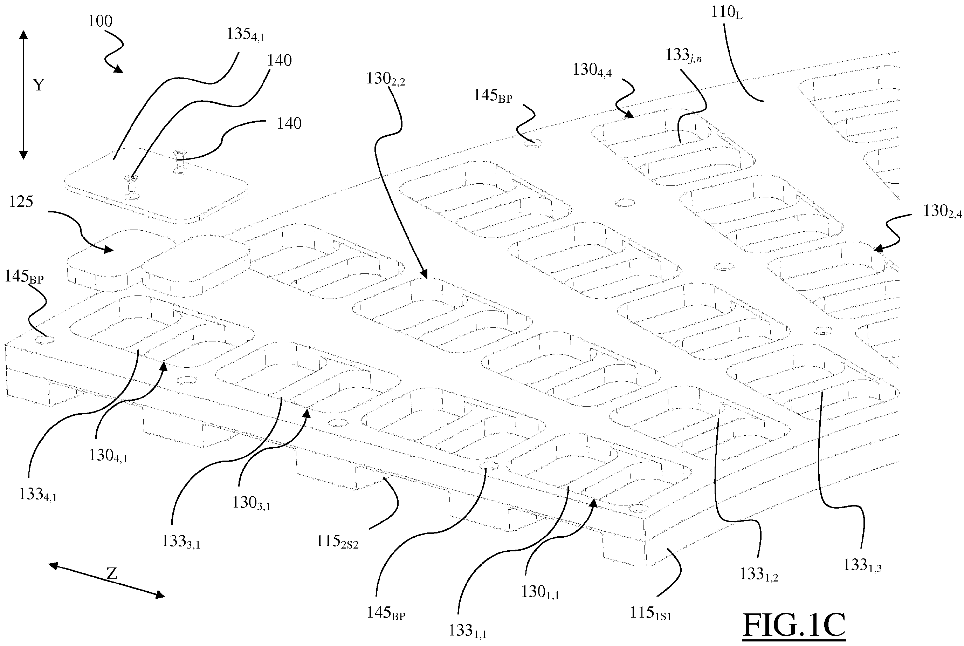

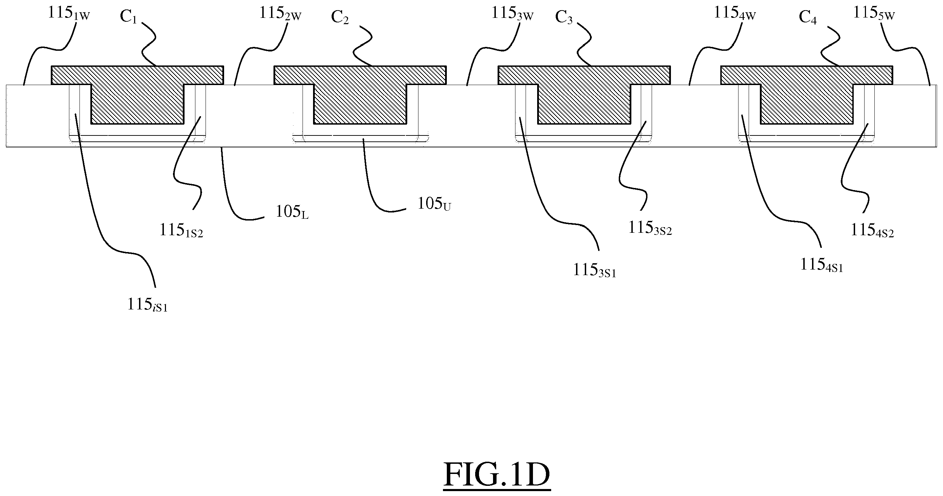

In the following, for ease of description, **Figure 1A** will be discussed jointly with **Figures 1B****,** **1C** and **1D****,** which show a perspective view, a close-up perspective partially-exploded view, and a sectional front view, respectively, of the forward guide structure **100.**

As visible in the figures, the forward guide structure **100** comprises a guide portion **105** for guiding a number *H* of chains *Cₕ* (h=1, *...H, with H* ≥ 1, *H* = 4 in the example at issue), illustrated in **Figure 1D****,** along a longitudinal direction **X** identifying the direction of movement of the chains **Cₕ,** and a base portion **110** for supporting (from below) the guide portion **105.** For the purposes of the present disclosure, in the examples at issue wherein curved guide structures are considered, the longitudinal direction **X** corresponds, for each point of the curve, to the tangential component of the curve passing for that point (as also graphically represented in **Figures 1A** and **1B****)**.

The guide portion **105** and the base portion **110** are adapted to be fastened to each another, preferably in a reversible manner (as better discussed below).

The guide portion **105** and the base portion **110** are preferably made of reciprocally different materials. More preferably, the guide portion **105** and the base portion **110** are made of materials having different characteristics of wear resistance and friction.

Even more preferably, the guide portion **105** is made of a material having a coefficient of friction lower than the coefficient of friction of the material of the base portion **110.** Additionally or alternatively, the material of the guide portion **105** has a wear resistance higher than the wear resistance of the material of the base portion **110.** According to an embodiment of the present invention, the material of the guide portion **105** comprises ultra-high-molecular-weight polyethylene (UHMWPE), also known as high-modulus polyethylene (HMPE) or high-performance polyethylene (HPPE), which ensures both low coefficient of friction and high wear resistance - in any case, other plastic materials may be used for the purpose.

Therefore, costs are reduced since material with characteristics of high wear resistance and/or low friction (which typically determine high costs) is used only for the guide portion **105** (which is the portion that, in use, is actually in contact with the chains **C*ₕ***), whereas the material of the base portion **110** can instead be a relatively low cost, cheaper material (such as a conventional thermoplastic material) having no specific constrain on characteristics of wear resistance and/or friction.

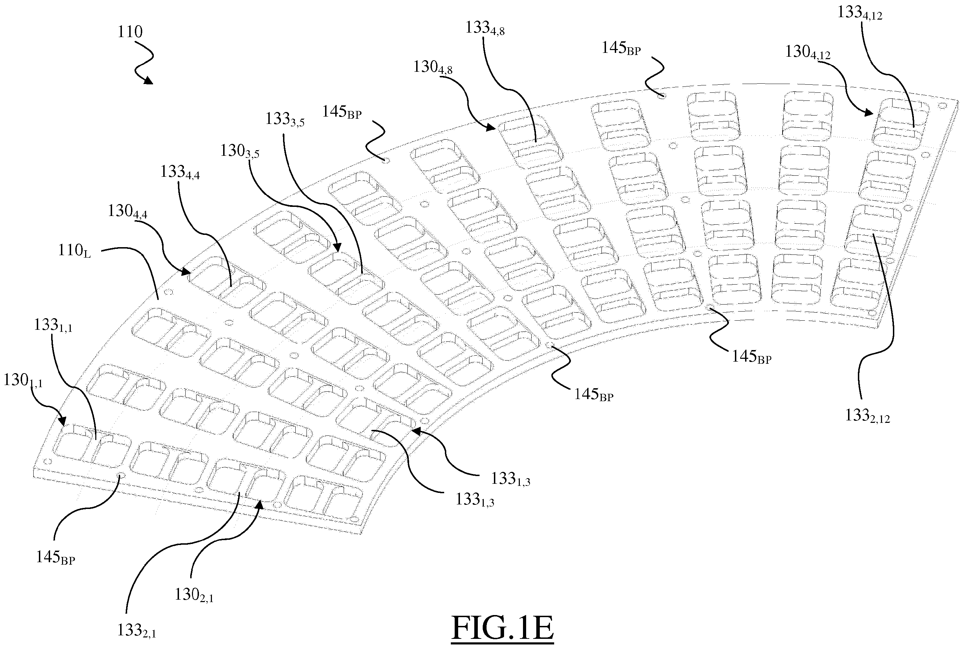

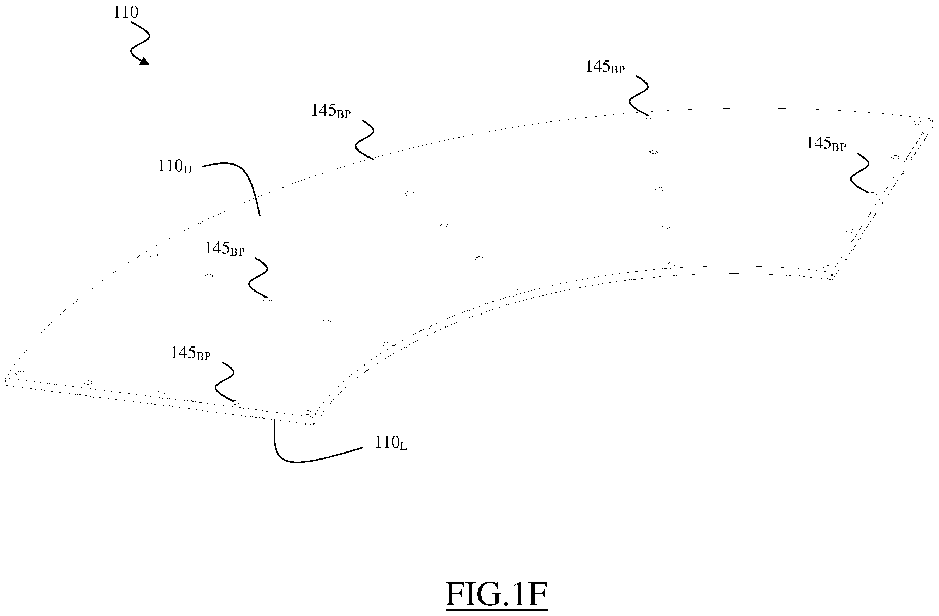

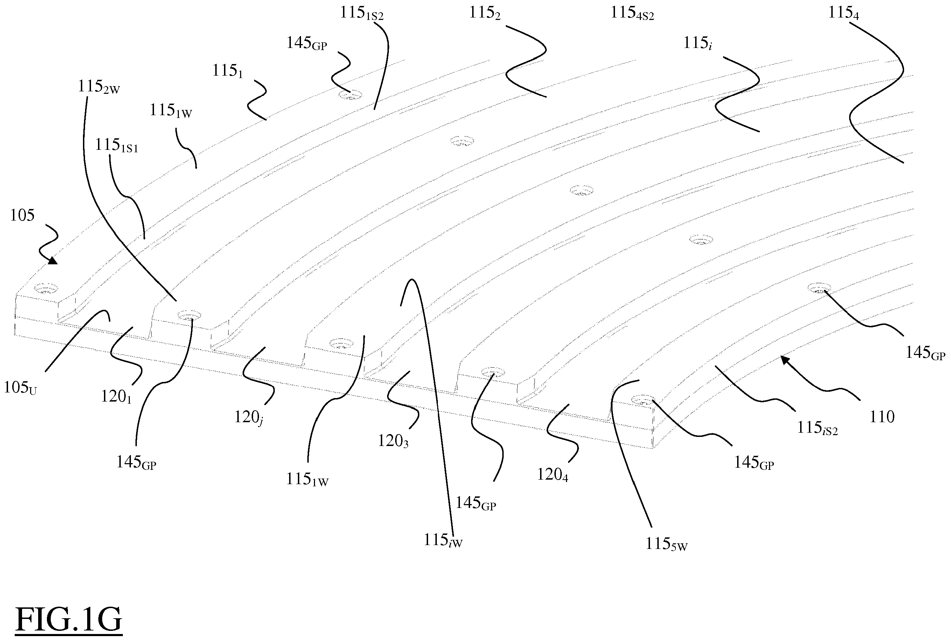

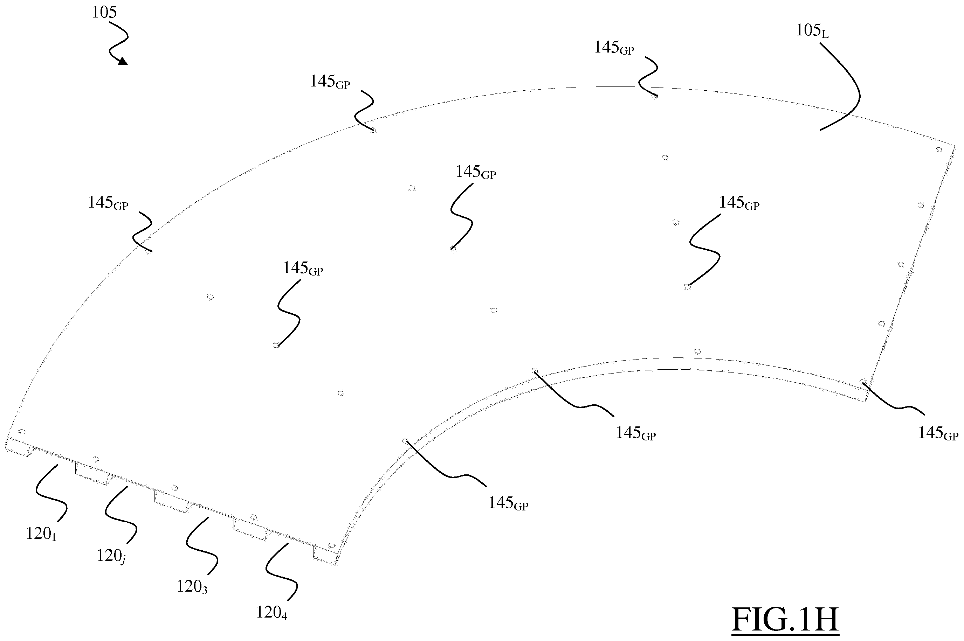

In the following, for ease of description, reference will be also made to **Figures 1E** and **1F****,** which show bottom and top perspective views, respectively, of the guide portion **105** according to an embodiment of the present invention, and to **Figures 1G** and **1H****,** which show top and bottom perspective views, respectively, of the base portion **110** according to an embodiment of the present invention.

As can be better appreciated in **Figures 1A****,** **1G** and **1H****,** the guide portion **105** comprises a surface **105u** that, in use, faces (and preferably contacts) the chains **C*ₕ*** and is oriented upwards, thus referred to as upper surface hereinafter, and a surface **105_{L}**, opposite the upper surface **105u,** that, in use, faces the base portion **110** and is oriented downwards, thus referred to as lower surface hereinafter.

The guide portion **105** preferably comprises a number / of rails **115;** (*i*=1, ..., /, with / ≥ 2), each one extending, along a vertical direction **Y** orthogonal to the longitudinal direction, from the upper surface **105u** of the guide portion **105** upwards. Each pair of rails **115*ᵢ*** delimits, along a transversal direction **Z** orthogonal to the longitudinal **X** and vertical **Y** directions, a guide channel **120*ⱼ*** (/=1, ..., *J,* with *J =* 1-1) for receiving or accommodating a respective chain **C*ₕ***, or a portion (preferably a lower portion) of the chain **C*ₕ***, thereby allowing each chain **C*ₕ*** to be guided along the forward section.

In the example at issue, five rails **115₁-115₅** are provided, which delimit four guide channels **120₁**-**120₄**, the guide portion **105** thus identifying a multi-channel guide portion. In any case, as will be understood from the following discussion, the present invention is not limited to a specific number of guide channels - for example, the present invention equivalently applies to a guide portion formed as a single-channel guide portion for moving a single chain.

Preferably, the rails **115₁-115₅** extend, along the longitudinal direction **X,** over the entire length of guide portion **105** (preferably, as illustrated, opening directly to its ends), and, along the transversal direction **Z,** parallel to each other (such that rails **115₁-115₂** delimit the guide channel **120₁**, rails **115₂-115₃** delimit the guide channel **120₂**, rails **115₃-115₄** delimit the guide channel **120₃**, and rails **115₄-115₅** delimit the guide channel **120₄**). More preferably, the rails **115₁-115₅** extend, along the transversal direction **Z,** parallel to each other at substantially same distances (such that the guide channels **120₁-120₄**-have substantially same width).

Each rail **115;** comprises an upper wall **115_{iw}** parallel to the upper surface **105u** of the guide portion **105,** and vertical side walls **115_{*i*S1}**,**115_{*i*S2}** extending, along the vertical direction **Y,** from opposite side ends of the respective upper wall **115_{iw}** to the upper surface **105u,** with each pair of vertical side walls **115_{*i*S1}**,**115_{*i*S2}** facing each other that delimit a respective guide channel **120*ⱼ*** (in the example at issue, the vertical side wall **115_{1S2}** of rail **115₁** and the vertical side wall **115_{2S1}** of rail **115₂** delimit the guide channel **120₁**, the vertical side wall **115_{2S2}** of rail **115₂** and the vertical side wall **115_{3S1}** of rail **115s** delimit the guide channel **120₂**, the vertical side wall **115_{3S2}** of rail **115s** and the vertical side wall **115_{4S1}** of rail **115₄** delimit the guide channel **120₃**, and the vertical side wall **115_{4S2}** of rail **115₄** and the vertical side wall **115_{5S1}** of rail **115₅** delimit the guide channel **120₄**).

Preferably, all the vertical side walls **115_{*i*S1}**,**115_{*i*S2}** (and, hence, all the rails **115*ᵢ***) have substantially same extension in height (*i.e*., along the vertical direction **η,** the upper walls **115_{iw}** thus identifying, as a whole, an uppermost surface of the guide portion **105** and the height of the vertical side walls **115_{*i*S1}**,**115_{*i*S2}** identifying a depth of the respective guide channels **120*ⱼ***. In any case, nothing prevents from manufacturing rails **115*ᵢ*** having properly different extensions in height, so as to have guide channels **120*ⱼ*** with different depths for receiving structurally different chains.

As can be appreciated in **Figures 1A** and **1C****,** the guide structure **100** preferably (although not necessarily) comprises magnetic interaction means adapted in use to magnetically interact with magnetic interaction means of the chain **C*ₕ*** to cause a magnetic attraction of each chain **C*ₕ*** within the respective guide channel **120*ⱼ*** (*i.e*., substantially along the vertical direction **η.** In this way, due to this magnetic attraction, each guide channel **120*ⱼ*** is adapted to slidably receive within it the lower portion of the respective chain **C*ₕ***, with the upper walls **115_{*i*W}** of the rails **115*ᵢ*** delimiting such guide channel **120*ⱼ*** (i.e., the uppermost surface **115_{*i*w}**) that face the chain **C*ₕ*** and preferably form a slide abutment for an upper portion of the chain **C*ₕ*** - as visible in **Figure 1D****.**

Preferably, although not necessarily, the magnetic interaction means of the forward guide structure **100** comprises one or more magnetic field generation elements (for example, electromagnets or, as herein assumed, permanent magnets - in the following, magnets) **125,** whereas the magnetic interaction means of the chains **C*ₕ*** comprises one or more elements of the chains **C*ₕ*** (such as, just as an example, coupling pins intended to couple links of each chain **C*ₕ*** to each other) made in ferritic steel or other ferromagnetic material so as to be responsive to the magnetic fields.

Preferably, the magnets **125** are arranged in the base portion **110,** and, more preferably, run below each guide channel **120*ⱼ*** (so as to determine the magnetic attraction of each chain **C*ₕ*** to the respective guide channel **120*ⱼ***).

The magnets **125** are preferably arranged in appropriate seats **130_{j,n}** (visible in **Figure 1C****)** formed in the base portion **110** at preferably but not necessarily regular intervals, such that each guide channel **120*ⱼ*** is associated with a number *N (e.g., N=12)* of seats **130*_{j,n}*** below it (see, in the example at issue, the *N* seats **130_{1,*n*}** below the guide channel **120₁**, the *N* seats **130_{2,*n*}** below the guide channel **120₂**, the *N* seats **130_{3,*n*}** below the guide channel **120₃** and the *N* seats **130_{4,*n*}** below the guide channel **120₄**).

Each seat **130_{*j*,*n*}** preferably extends from a surface **110_{L}** of the base portion **110** that, in use is oriented downwards, thus referred to as lower surface hereinafter, towards (without opening to) a surface **110u** that, in use, faces the lower surface **105_{L}** of the guide portion **105** and is oriented upwards, thus referred to as upper surface hereinafter (the upper **110u** and lower **110_{L}** surfaces of the base portion **110** being thus opposite to each other). The seats **130_{*j*,*n*}** are preferably formed by removal of material from the base portion **110** (for example by means of numerical control mechanical processing techniques). The seats **130***_{**j,**n}* are therefore accessible from below when the forward guide structure **100** is installed to the rest of the article conveyor.

In this way, in use, the same guide structure **100** acts as a shield, that is as an "umbrella", that avoids that liquid and slurry (for example, liquids used for periodic cleaning of the article conveyor, or slurry that may escape from the transported articles) penetrate into the seats **130_{*j*,*n*}** thereby stagnating therein, thus making removal for hygienic reasons difficult and promoting instead the proliferation and spread of bacteria.

According to the exemplary illustrated embodiment, the magnets **125** are accommodated within respective seats **130*_{j,n}***. The seats **130_{*j*,*n*}** are preferably closable, from below, by respective lids or caps **135*****_{j,n}**,* for example removable lids or caps **135*_{j,n}***, which advantageously avoid both penetration of liquid and slurry into the seats **130_{*j*,*n*}** and the fall by gravity of the magnets **125** from the respective seats **130_{*j*,*n*}** when the forward guide structure **100** is in use.

Preferably, as illustrated, the magnets **125** are arranged in pairs, each pair of magnets **125** being for example accommodated within a respective seat **130*_{j,n}***. Each seat **130_{*j*,*n*}** preferably comprises a median septum **133*_{j,n}*** (shown in **Figures 1C** and **1E****)** that essentially divides the respective seat **130*_{j,n}*** in two parts (hereinafter, seat parts), with each magnet **125** of the pair that is preferably accommodated within a respective seat part.

According to the preferred embodiment herein considered, each lid **135*_{j,n}*** is made of a ferromagnetic material, each pair of permanent magnets and the respective plate in ferromagnetic material defining a horseshoe magnet for increasing the magnetic attraction of the chains **Cn** into the respective channels **120*ⱼ*** - in any case, lids **135*_{j,n}*** made of ferromagnetic material may also be associated with seats housing single magnets (instead of magnet pairs).

Each lid **135*_{j,n}*** is preferably fixed to the body of the base portion **110** by fixing means, such as one or more (preferably two) screws **140** screwed into threaded holes preferably formed in the septum **133*_{j,n}***. The use of screws **140** for fixing the lids **135*_{j,n}***, together with free accessibility thereof from below, makes assembly and disassembly operations feasible and easy.

According to the present invention, the forward guide structure **100** further comprises fastening means for fastening the guide portion **105** and the base portion **110** to each other at one or more rails **115i.** Preferably, although not necessarily, in order to allow said fastening, the guide portion **105** and/or the base portion **110** comprises holes or through holes for the fitting of the fastening means, as discussed herebelow.

As visible in the figures, the guide portion **105** preferably comprises one or more holes **145_{GP}**, preferably a plurality of holes **145_{GP}**, extending, along the vertical direction **Y,** into one or more of the rails **115*ᵢ*** (preferably, as illustrated, all the rails **115*ᵢ*),** *i.e.* between the upper **105u** and uppermost **115_{*i*w}** surfaces of the guide portion **105,** for allowing the guide portion **105** to be fastened to the base portion **110.** Broadly speaking, fastening of the guide portion **105** to the base portion **110** is achieved by means of fastening means fitted into the holes **145_{GP}** of the guide portion and into the base portion **110.**

As visible in the figures, the base portion **110** advantageously but not necessarily comprises one or more holes **145_{BP}**, preferably a plurality of holes **145_{GP}**, extending into the base portion **110** between the lower **110_{L}** and upper **110u** surfaces thereof.

Preferably, the holes **145_{GP},145_{BP}** are arranged such that, upon superposition of the lower surface **105_{L}** of the guide portion **105** with the upper surface **110u** of the base portion **110,** each hole **145_{GP}** of the guide portion **105** matches a corresponding hole **145_{BP}** of the base portion **110** thereby allowing fastening means to be received in the holes **145_{GP}** of the guide portion **105** and in the holes hole **145_{BP}** of the base portion 110 (thus allowing the guide portion 105 to be fastened to the base portion **110).**

According to the considered embodiment, the holes **145_{GP}** of the guide portion **105** are through holes opening both to the upper walls **115_{*i*w}** of the rails **115*ᵢ*** (or, equivalently, to the uppermost surface **115_{*i*w}** of the guide portion **105)** and to the lower surface **105_{L}** of the guide portion **105),** and the holes **145_{BP}** of the base portion **110** are through holes opening to both upper **110_{U}** and lower **110_{L}** surfaces of the base portions.

Without losing generality, in order to allow fastening of the guide portion **105** to the base portion **110,** holes instead of through holes can be used in the guide portion **105** or in the base portion **110.** For example, through holes **145_{GP}** in the guide portion **105** and holes in the base portion **110** might be envisaged when fastening from above is desired (in which case the holes in the base portion **110** would extend towards, without opening to, the lower surface **110_{L}** thereof), or through holes **145_{BP}** in the base portion **110** and holes in the guide portion **105** might be envisaged when fastening from below is desired (in which case the holes in the guide portion **105** would extend towards, without opening to, the upper wall **115_{iw}** of the rails **115*ᵢ*** (or, equivalently, to the uppermost surface **115_{iw}** of the guide portion **105).**

According to an embodiment of the present invention, shown in **Figure 1A****,** the fastening means comprises metric screws **150s** adapted to be fitted into the through holes **145_{GP}** of the guide portion **105** and coupled to threaded inserts **150_{B}** fitted into the holes (or through holes) **145_{BP}** of the base portion **110 -** in any case, the metric screws **150s** may also be fitted into holes or threaded holes of the base portion **110** and coupled to threaded inserts fitted into the holes (or through holes) of the guide portion **105** when, for example, fastening from below is desired.

Preferably, as illustrated, said threaded inserts **150_{B}** comprise bushings, each bushing being for example threaded both externally (so as to allow firm anchoring of the bushing into the respective hole (or through hole) of the base portion **110** (or of the guide portion **105)** and internally (so as to allow the metric screw **150s** to be threaded in the bushing).

According to an alternative embodiment of the present invention, the fastening means comprises self-tapping screws, in which case the holes or through holes **145_{BP}** of the base portion **110** (fastening from above) or the holes or through holes **145_{GP}** of the guide portion (fastening from below) may also be omitted (due to the capability of a self-tapping screw of tapping its own hole as it is driven into the material) or used as (or replaced by) aligning means for allowing easy and correct alignment between the guide portion **105** and the base portion **110.**

According to embodiments of the present invention, the fastening means may comprise, additionally to the metric screw/bushing pairs or to the self-tapping screws, a gasket or sealing and/or mastic or silicone layer at the interface between the guide **105** and base **110** portion (*i.e*., between the lower surface **105_{L}** of the guide portion **105** and the upper surface **110u** of the base portion **110),** preferably at one or more side edges (such as a perimeter part) thereof, in order to provide additional protection against penetration of liquid and slurry into the seats **130*_{j,n}*.**

Therefore, irrespective of the presence of holes or through holes in the guide portion **105** or in the base portion **110,** according to the present invention fastening between the guide portion **105** and the base portion **110** is achieved by fastening means fitted into the rails **115*ᵢ*** (*i*.*e*., passing through them either completely or partially) and, by arranging the respective holes, or through holes, **145_{GP}** (when provided) in the rails **115*ᵢ*.**

As rails **115*ᵢ*** are locations of the guide portion **105** that offer high structural strength, an effective fastening between the guide **105** and base **110** portions can be achieved.

Moreover, fitting the fastening means (and arranging the holes, or through holes, **145_{GP}**, when provided) in the rails **115*ᵢ*** allows achieving easy manufacturing of the guide portion **105,** in that the use of complex and costly machining for making reinforcing members (such as the teeth disclosed in EP0903307) intended to prevent bending of the guide portion **105** upon application of the fastening means, is avoided. In fact, with reference for example to EP0903307, multiple positioning and machining of the U-shaped member, at both top and bottom sides thereof, are required for manufacturing reinforcing members in form of teeth. On the contrary, the structural simplicity of the guide portion **105** according to the present invention translates in a reduced number of positioning and machining. Even more importantly, the absence of teeth or of other reinforcing members results in a flat (*i*.*e*., planar) surface of the lower surface **105_{L}** of the guide portion **105,** such that positioning and machining are advantageously performed at a single side only (*i.e.* the upper surface **105u** of the guide portion **105).**

In addition, avoidance of the reinforcing members averts waste of material of the guide portion **105** (which is particularly beneficial when, as in the present invention, the material of the guide portion **105** is a relatively expensive material).

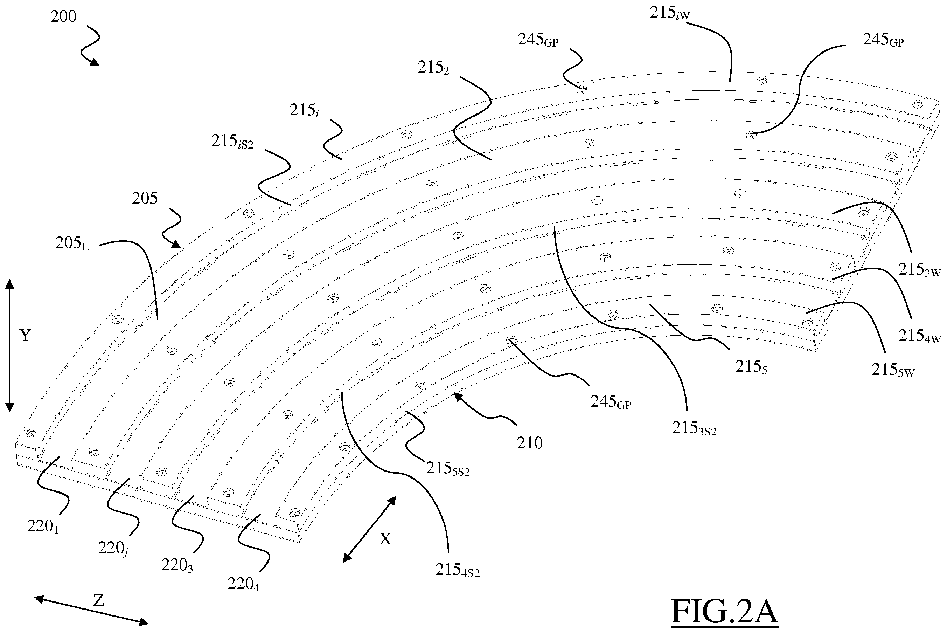

With reference now to **Figure 2A****,** it shows a perspective exploded view of a guide structure **200** for guiding chains along the return section (thus referred to as return guide structure hereinafter), according to an embodiment of the present invention. In this figure, the return guide structure **200** is shown upside down with respect to its orientation of use.

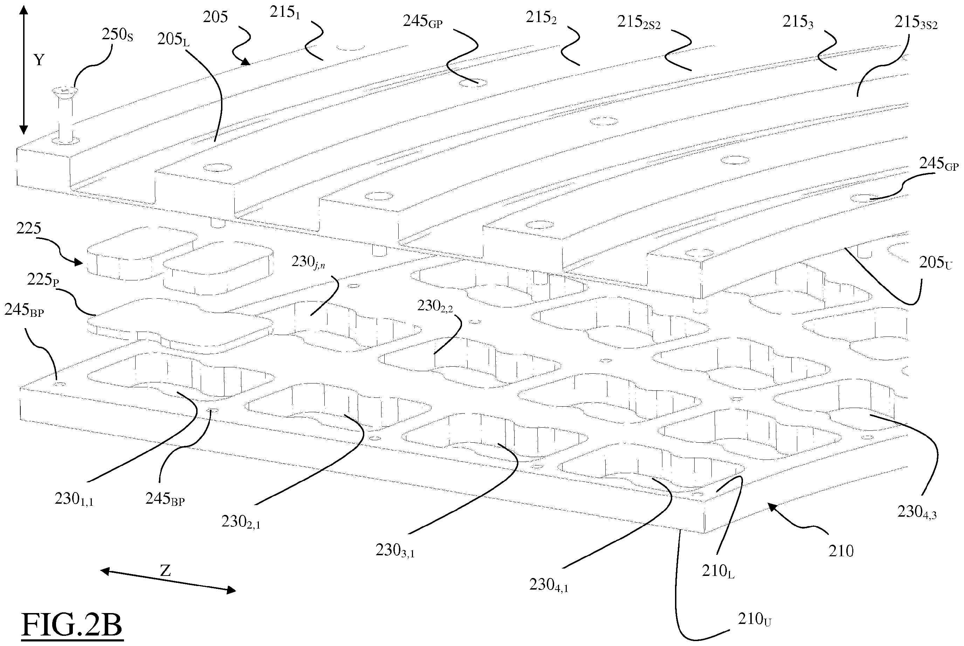

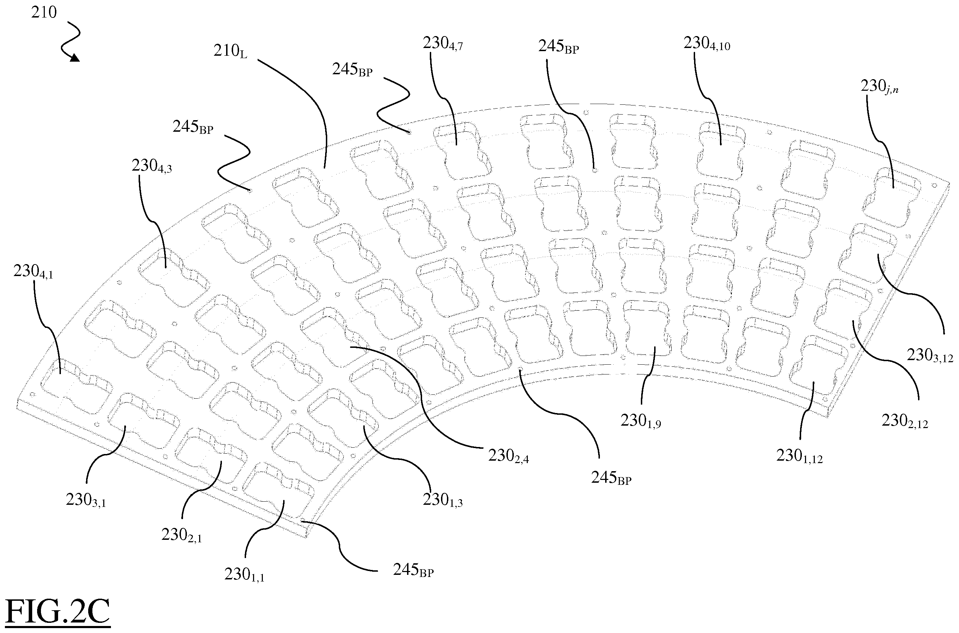

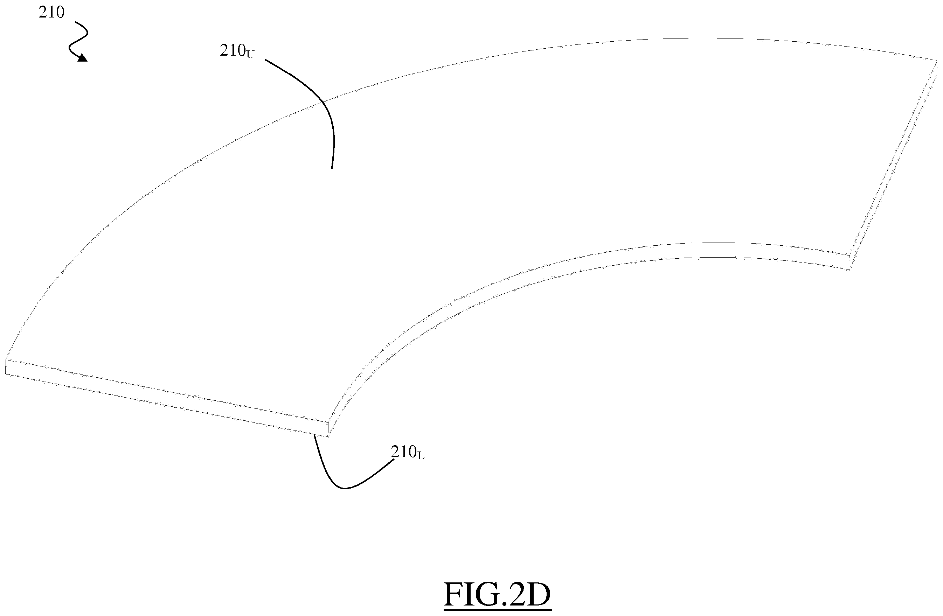

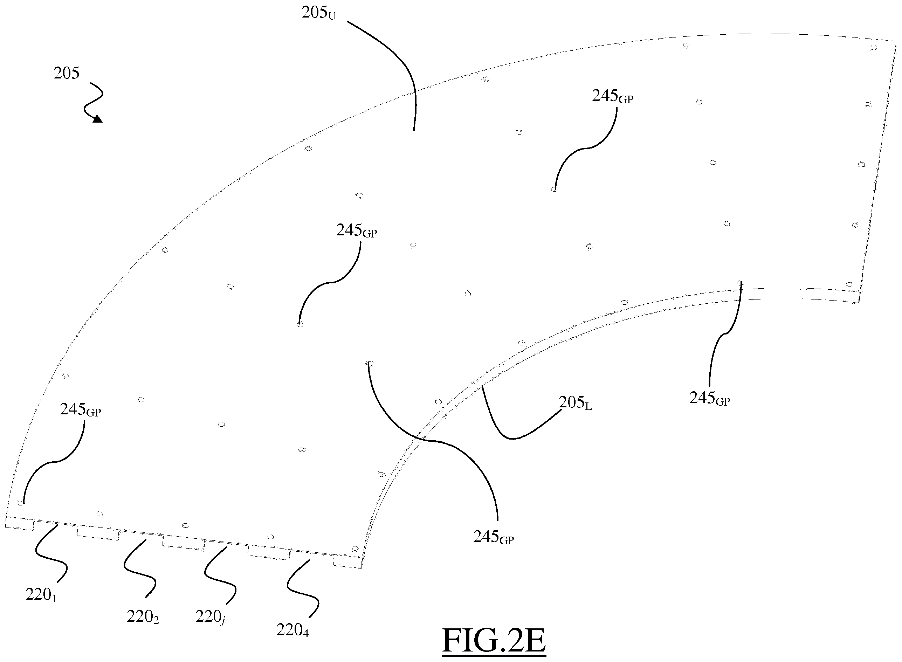

In the following, for ease of description, **Figure 2A** will be discussed jointly with **Figure 2B****,** which shows a close-up perspective exploded view of the return guide structure **200,** with **Figures 2C** and **2D****,** which show bottom and top perspective views, respectively, of a base portion of the return guide structure **200,** and **Figure 2E****,** which shows a top perspective view of a guide portion of the return guide structure **200.**

As visible in the figures, the return guide structure **200** comprises a guide portion **205** for guiding the chains **C*ₕ*** along the longitudinal direction **X,** and a base portion **210** for supporting (from above) the guide portion **205.** The guide portion **205** and the base portion **210** are adapted to be fastened to each another, preferably in a reversible manner (as better discussed below).

As for the guide **105** and base **110** portions discussed above, the guide portion **205** and the base portion **210** are preferably made of reciprocally different materials. More preferably, the guide portion **205** and the base portion **210** are made of materials having different characteristics of wear resistance and friction.

Even more preferably, the guide portion **205** is made of a material having a coefficient of friction lower than the coefficient of friction of the material of the base portion **210.** Additionally or alternatively, the material of the guide portion **205** has a wear resistance higher than the wear resistance of the material of the base portion **210.** According to an embodiment of the present invention, the material of guide portion **205** comprises ultra-high-molecular-weight polyethylene (UHMWPE), which ensures both low coefficient of friction and high wear resistance (in any case, other plastic materials may be used for the purpose), whereas the material of the base portion **210** is a low cost material (such as a conventional thermoplastic material) having no specific constrain on characteristics of wear resistance and/or friction.

As can be better appreciated in **Figures 2A** and **2B****,** the guide portion **205** comprises a surface **205_{L}** that, in use, faces (and preferably contacts) the chains **C*ₕ*** and is oriented downwards, thus referred to as lower surface hereinafter, and a surface **205u,** opposite the lower surface **205_{L},** that, in use, faces the base portion **210** and is oriented upwards, thus referred to as upper surface hereinafter.

Similarly to the guide portion **105** discussed above, the guide portion **205** preferably comprises a number / of rails **215*ᵢ*** (*i*=1, ..., I, with / ≥ 2), each one extending, along the vertical direction **Y,** from the lower surface **205u** of the guide portion **205** downwards, with each pair of rails **215*ᵢ*** that delimits, along the transversal direction **Z,** a guide channel **220*ⱼ*** (*j*=1, ..., *J*, with *J* = /-1) for receiving or accommodating a respective chain **C*ₕ***, or a portion (preferably a lower portion) of the chain **C*ₕ*** (thereby allowing each chain **C*ₕ*** to be guided along the return section).

In the example at issue, five rails **215₁-215₅** are provided, which delimit four guide channels **220₁**-**220₄,** the guide portion **205** thus identifying a multi-channel guide portion. In any case, as will be understood from the following discussion, the present invention is not limited to a specific number of guide channels - for example, the present invention equivalently applies to a guide portion formed as a single-channel guide portion for moving a single chain.

Preferably, the rails **215₁-215₅** extend, along the longitudinal direction **X,** over the entire length of guide portion **205** (preferably, as illustrated, opening directly to its ends), and, along the transversal direction **Z,** parallel to each other (such that rails **215₁-215₂** delimit the guide channel **220₁,** rails **215₂-215₃** delimit the guide channel **220₂,** rails **215₃-215₄** delimit the guide channel **220₃**, and rails **215₄-215₅** delimit the guide channel **220₄**). More preferably, the rails **215₁-215₅** extend, along the transversal direction **Z,** parallel to each other at substantially same distances (such that the guide channels **220₁-220₄**-have substantially same width).

Each rail **215;** comprises a lower wall **215_{*i*w}** parallel to the lower surface 205_{L} of the guide portion **205,** and vertical side walls **215_{*i*S1},215_{*i*S2}** extending, along the vertical direction Y, from opposite side ends of the respective lower wall **215_{*i*w}** to the lower surface **205_{L}**, with each pair of vertical side walls **215_{*i*S1},215_{*i*S2}** facing each other that delimit a respective guide channel **220*ⱼ*** (in the example at issue, the vertical side wall **215_{1S2}** of rail **215₁** and the vertical side wall **215_{2S1}** of rail **215₂** delimit the guide channel **220₁,** the vertical side wall **215_{2S2}** of rail **215₂** and the vertical side wall **215_{3S1}** of rail **215s** delimit the guide channel **220₂,** the vertical side wall **215_{3S2}** of rail **215₃** and the vertical side wall **215_{4S1}** of rail **215₄** delimit the guide channel **220₃**, and the vertical side wall **215_{4S2}** of rail **215₄** and the vertical side wall **215_{5S1}** of rail **215₅** delimit the guide channel **220₄**).

Preferably, all the vertical side walls **215_{*i*S1},215_{*i*S2}** (and, hence, all the rails **215*ᵢ***) have substantially same extension in height, the lower walls **215_{*i*w}** thus identifying, as a whole, a lowermost surface of the guide portion **205** and the height of the vertical side walls **215_{*i*S1},215_{*i*S2}** identifying a depth of the respective guide channels **220*ⱼ*.** In any case, nothing prevents from manufacturing rails **115*ᵢ*** having properly different extensions in height, so as to have guide channels **220*ⱼ*** with different depths for receiving structurally different chains.

The return guide structure **200** preferably comprises magnetic interaction means adapted in use to magnetically interact with magnetic interaction means of the chain **C*ₕ*** to cause a magnetic attraction of each chain **C*ₕ*** within the respective guide channel **220*ⱼ*** (*i.e*., substantially along the vertical direction **η.** In this way, due to this magnetic attraction, each guide channel **220*ⱼ*** is adapted to slidably receive within it the lower portion of the respective chain **C*ₕ***, with the lower walls **215_{*i*W}** of the rails **215*ᵢ*** delimiting such guide channel **220*ⱼ*** (*i.e*., the lowermost surface **215_{*i*w}**) that face the chain **C*ₕ*** and preferably preferably form a slide abutment for an upper portion of the chain **C*ₕ*.**

Preferably, although not necessarily, the magnetic interaction means of the return guide structure 200 comprises one or more magnetic field generation elements (for example, electromagnets or, as herein assumed, permanent magnets - in the following, magnets) **225,** whereas the magnetic interaction means of the chains **C*ₕ*** comprises one or more elements of the chains **C*ₕ*** (such as, just as an example, coupling pins intended to couple links of each chain **C*ₕ*** to each other) made in ferritic steel or other ferromagnetic material so as to be responsive to the magnetic fields.

Preferably, the magnets **225** are arranged in the base portion **210,** and, more preferably, run below each guide channel **220*ⱼ*** (so as to determine the magnetic attraction of each chain **C*ₕ*** to the respective guide channel **220*ⱼ*).**

The magnets **225** are preferably arranged in appropriate seats **230*_{j,n}*** (visible in **Figures 2B** and **2C****)** formed in the base portion **210** at preferably but not necessarily regular intervals, such that each guide channel **220*ⱼ*** is associated with a number *N* (*e.g., N=12*) of seats **230*_{j,n}*** above it (see, in the example at issue, the *N* seats **230_{1,*n*}** above the guide channel **220₁,** the *N* seats **230_{2,*n*}** above the guide channel **220₂,** the *N* seats **230_{3,*n*}** above the guide channel **220₃** and the *N* seats **230_{4,*n*}** above the guide channel **220₄**).

Each seat **230*_{j,n}*** preferably extends from a surface **210_{L}** of the base portion **210** that, in use is oriented downwards and faces the guide portion **205** (*i.e*., the upper surface **205u** thereof), thus referred to as lower surface hereinafter, towards (without opening to) a surface **210u** that, in use, is oriented upwards, thus referred to as upper surface hereinafter (the upper **210u** and lower **210_{L}** surfaces of the base portion **210** being thus opposite to each other). The seats **230*_{j,n}*** are preferably formed by removal of material from the base portion **210** (for example by means of numerical control mechanical processing techniques). The seats **230*_{j,n}*** are therefore accessible from below when the return guide structure **200** is installed to the rest of the article conveyor.

In this way, in use, the guide **205** and base **210** portions act themselves as shields that avoid that liquid and slurry (for example, liquids used for periodic cleaning of the article conveyor, or slurry that may escape from the transported articles) penetrate into the seats **230*_{j,n}*** from above and from below, respectively, thereby stagnating therein and making removal for hygienic reasons difficult. Therefore, with respect to the forward guide structure **100,** no lids for the seats **230*_{j,n}*** are required for the embodiment of return guide structure **200** herein discussed, in that the function avoiding penetration of liquid and slurry and the fall by gravity of the magnets **225** is carried out by the guide portion **205** - however, the presence of lids may be envisaged when forming seats extending from (and opening to) the upper surface **210u** of the base portion **210** towards (without opening to) the lower surface **210_{L}.**

Preferably, as illustrated, the magnets **225** are arranged in pairs, each pair of magnets **225** being for example accommodated within a respective seat **230*_{j,n}***. According to the exemplary considered embodiment, each pair of magnets **225** is magnetically coupled to a plate **225_{P}** in ferromagnetic material, preferably space apart from each other. In this way, each pair of magnets **225** and the respective plate **225_{P}** in ferromagnetic material define a horseshoe magnet.

According to the present invention, the return guide structure **200** further comprises fastening means for fastening the guide portion **205** and the base portion **210** to each other at one or more rails **215;.** Preferably, although not necessarily, in order to allow said fastening, the guide portion **205** and/or the base portion **210** comprises holes or through holes for the fitting of the fastening means, as discussed herebelow.

The guide portion **205** preferably comprises one or more holes **245_{GP}**, preferably a plurality of holes **245_{GP}**, extending, along the vertical direction **Y,** into one or more of the rails **215;** (preferably, as illustrated, all the rails **215*ᵢ***), *i.e*. between the lower **205_{L}** and lowermost **215_{*i*W}** surfaces of the guide portion **205,** for allowing the guide portion **205** to be fastened to the base portion **210.** Broadly speaking, as discussed above, fastening of the guide portion **205** to the base portion **110** is preferably achieved by means of fastening means fitted into the holes **245_{GP}** of the guide portion and into the base portion **210.**

As visible in the figures, the base portion **210** advantageously but not necessarily comprises one or more holes **245_{BP}**, preferably a plurality of holes **245_{GP}**, extending into the base portion **210** between the lower **210_{L}** and upper **210u** surfaces thereof.

Preferably, the holes **245_{GP},245_{BP}** are arranged such that, upon superposition of the upper surface **205u** of the guide portion **205** with the lower surface **210_{L}** of the base portion **210,** each hole **245_{GP}** of the guide portion **205** matches a corresponding hole **245_{BP}** of the base portion **110** thereby allowing fastening means to be received in the holes **245_{GP}** of the guide portion **205** and in the holes hole **245_{BP}** of the base portion **210** (thus allowing the guide portion **205** to be fastened to the base portion **210).**

According to the considered embodiment, the holes **245_{GP}** of the guide portion **205** are through holes opening both to the lower walls **215_{*i*w}** of the rails **215*ᵢ*** (or, equivalently, to the lowermost surface **205_{*i*W}** of the guide portion **205)** and to the upper surface **205u** of the guide portion **205),** as visible in **Figures 2B** and **2E****.**

The holes **245_{BP}** of the base portion **210** may for example be through holes opening to both upper **210u** and lower **210_{L}** surfaces of the base portion **210,** or, as exemplary illustrated in **Figures 2C** and **2D****,** holes opening only to the lower surface **210_{L}** of the base portion **210** (the upper surface **210u** of the base portion **210** being thus flat and free from machining).

Similarly to the above discussion, depending on whether fastening from above or from below is desired, holes instead of through holes can be used in the guide portion **205,** and/or through holes instead of holes can be used in the base portion **210.**

According to an embodiment of the present invention, not shown, the fastening means comprises metric screws **250_{S}** adapted to be fitted into through holes of the guide portion **205** and coupled to threaded inserts (*e.g*., externally and/or internally threaded bushings), not visible in the figures, fitted into the holes (or through holes) of the base portion **210** - in any case, the metric screws **250_{S}** may also be fitted into holes or threaded holes of the base portion **210** and coupled to threaded inserts fitted into the holes (or through holes) of the guide portion **205** when, for example, fastening from above is desired.

According to an alternative embodiment of the present invention the fastening means comprises self-tapping screws, not shown, in which case the holes or through holes **245_{BP}** of the base portion **210** (fastening from below) or the holes or through holes **245_{GP}** of the guide portion **205** (fastening from above) may also be omitted (due to the capability of a self-tapping screw of tapping its own hole as it is driven into the material) or used as (or replaced by) aligning means for allowing easy and correct alignment between the guide portion **205** and the base portion **210.**

Therefore, irrespective of the presence of holes or through holes in the guide portion **205** or in the base portion **210,** according to the present invention fastening between the guide portion **205** and the base portion **210** is achieved by fastening means fitted into the rails **215*ᵢ*** (*i*.*e*., passing through them either completely or partially), and by arranging the respective holes, or through holes, **245_{GP}** (when provided) in the rails **215*ᵢ***.

The advantages of fitting the fastening means (and arranging the holes, or through holes, **245_{GP}**, when provided) in the rails **215*ᵢ*** of the guide portion **205** of the return guide structure **200** are the same as those discussed in connection with the forward guide structure **100,** and are not repeated for the sake of conciseness.

According to embodiments of the present invention, the fastening means may comprise, additionally to the metric screw/bushing pairs or to the self-tapping screws, a gasket or sealing and/or mastic or silicone layer at the interface between the guide **205** and base **210** portion (*i*.*e*., between the upper surface **205u** of the guide portion **205** and the lower surface **210_{L}** of the base portion **210),** preferably at one or more side edges (such as a perimeter part) thereof, in order to provide additional protection against penetration of liquid and slurry into the seats **230*_{j,n}***.

Similarly to the above discussion, the absence of teeth or of other reinforcing members in the guide structure **200** results in a flat (*i*.*e*., planar) surface of the upper surface **205u** of the guide portion **205,** such that positioning and machining are advantageously performed at a single side only (*i*.*e*. at the lower surface **205_{L}** of the guide portion **205).**

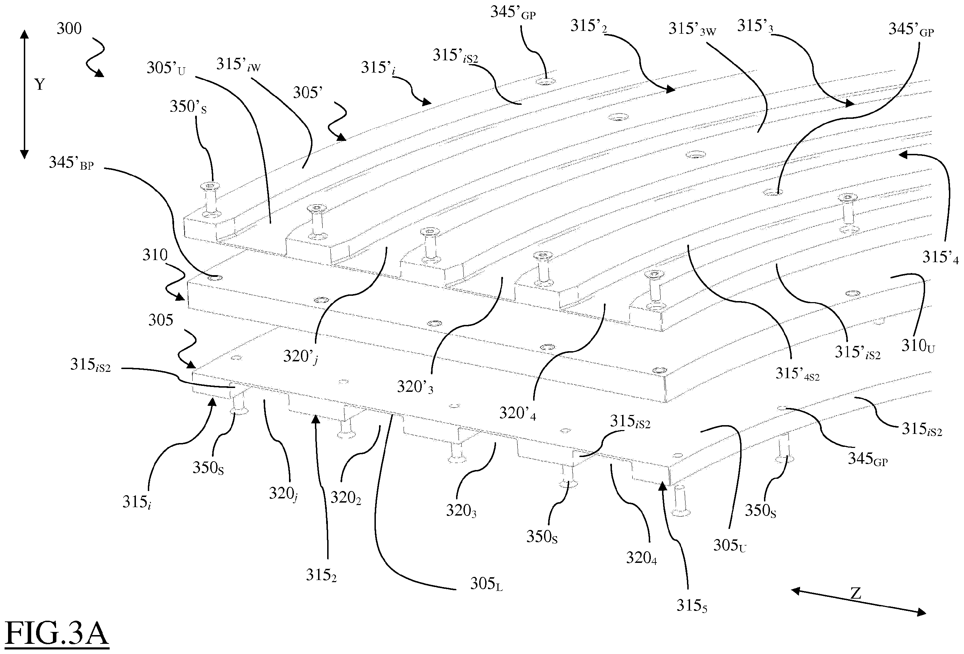

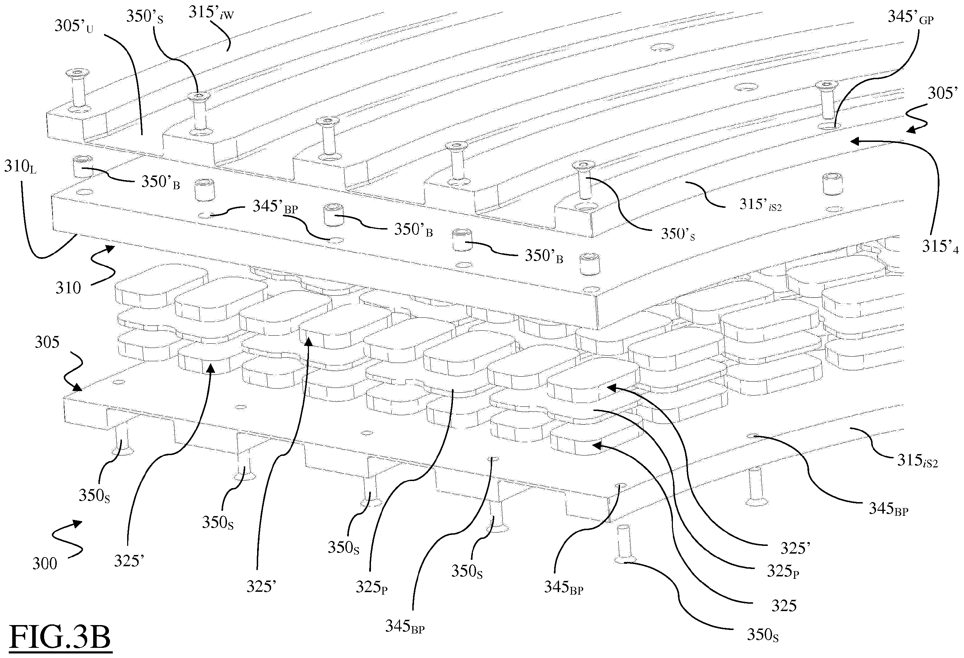

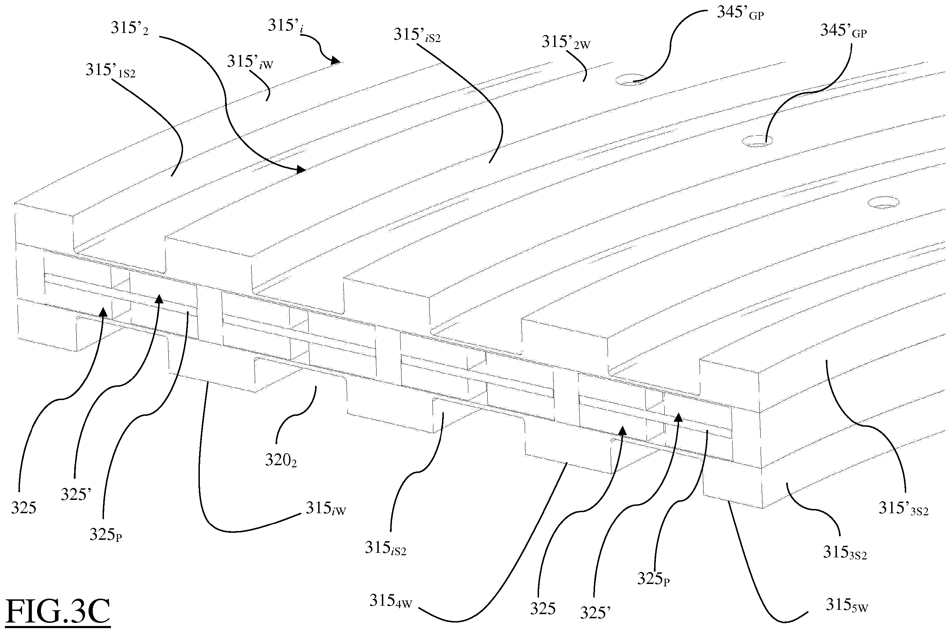

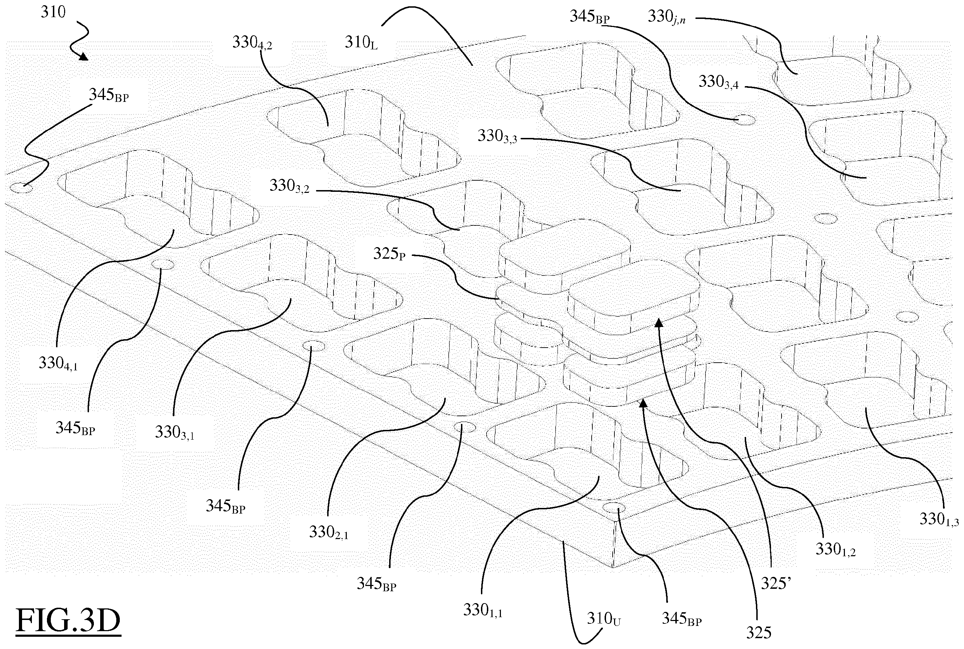

With reference now to **Figure 3A****,** it shows a perspective partly exploded view of a forward and return guide structure **300** according to an embodiment of the present invention. For the sake of description ease, such a figure will be discussed jointly with **Figures 3B** and **3C****,** which show a perspective exploded view and a perspective sectional view, respectively, of the forward and return guide structure **300,** and with **Figure 3D****,** which shows a perspective view of a base portion of the forward and return guide structure **300.**

The forward and return guide structure **300** comprises a guide portion **305,** a further guide portion **305',** and a base portion **310** between the guide portion **305** and the further guide portion **305'** along the vertical direction **Y.**

The guide portion **305** and the further guide portion **305'** of the forward and return guide structure **300** are equivalent to the guide portion **205** of the return guide structure **200** and to the guide portion **105** of the forward guide structure **100,** respectively, and the base portion **310** of the forward and return guide structure **300** is similar to the base portion **210** of the return guide structure **200.**

In the following, elements of the guide portion **305,** of the further guide portion **305',** and of the base portion **310** that are equivalent to those of the guide portion **105,** of the guide portion **205,** and of the base portion **210,** respectively, will not be discussed again (in any case, they are denoted in the figures by corresponding number references properly differentiated by the first digit). Moreover, all the embodiments, alternatives and considerations discussed in connection with the guide portion **105,** the guide portion **205** and the base portion **210** are intended to apply mutatis mutandis to the guide portion **305,** the further guide portion **305'** and the base portion **310,** respectively.

As visible in the figures, the guide portion **305** is fastened to the base portion **310** (with the lower surface **310_{L}** of the base portion **310** that faces the upper surface **305u** of the guide portion **305),** preferably by fastening means comprising, for example, metric screws **350s** adapted to be fitted into through holes **345_{GP}** of the guide portion **305,** and threaded inserts (*e*.*g*., internally and, preferably, externally threaded bushings), not visible in the figures, fitted into the holes **345_{BP}** of the base portion **310** for being coupled to the metric screws **350_{S}.** Similarly, the further guide portion **305'** is fastened to the base portion **310** (with the upper surface **310u** of the base portion **310** that faces the lower surface **305'_{L}** of the further guide portion **305'),** preferably by fastening means comprising, for example, metric screws **350's** adapted to be fitted into through holes **345'_{GP}** of the further guide portion **305',** and threaded inserts (*e*.*g*., internally and, preferably, externally threaded bushings), shown in **Figure 3B****,** fitted into the holes **345'_{BP}** of the base portion **310** for being coupled to the metric screws **350's.** In any case, nothing prevents for forming through holes in the base portion **310,** not shown, such that each pair of metric screws **350_{S},350'_{S}** (or other fastening means) are fitted into a same through hole (from opposite sides) - in which case, a single threaded insert (*e*.*g*., bushing) may for example be provided in each through hole.

As visible in the figures, the holes **345_{BP}** opening to the lower surface **305_{L}** of the base portion **310** (and, hence, the through holes **345_{GP}** of the guide portion **305)** and the holes **345'_{BP}** opening to the upper surface **305'u** of the base portion **310** (and, hence, the through holes **345'_{GP}** of the further guide portion **305')** are staggered to each other, preferably, as illustrated, along the longitudinal direction **X** (*i*.*e*., along the rails **315*ᵢ*,315'*ᵢ*.**). In this way, fastening of the guide portion **305** and of the further guide portion **305'** on the same base portion **310** does not interfere each other, while ensuring the above-discussed advantages determined by fastening at the rails **315*ᵢ*,315'*ᵢ***.

Preferably, as illustrated in **Figures 3B****,** **3C** and **3D****,** each seat **330*_{j,n}*** accommodates four magnets. More preferably, each seat **330*_{j,n}*** accommodates two pairs of magnets, namely a pair of magnets **325** for attracting the chains **C*_{H}*** downwards in the guide portion **305** (forward path) and a pair of magnets **325'** for attracting the chains **C*_{H}*** upwards in the further guide portion **305'** (forward path). Even more preferably, each pair of magnets **325,325'** is magnetically coupled to a plate **325_{P}** in ferromagnetic material, preferably from opposite (*e*.*g*., top and bottom) sides thereof. In this way, each pair of magnets **325,325'** and the respective plate **325_{P}** in ferromagnetic material define two horseshoe magnets accommodated in a same seat **330*_{j,n}***.

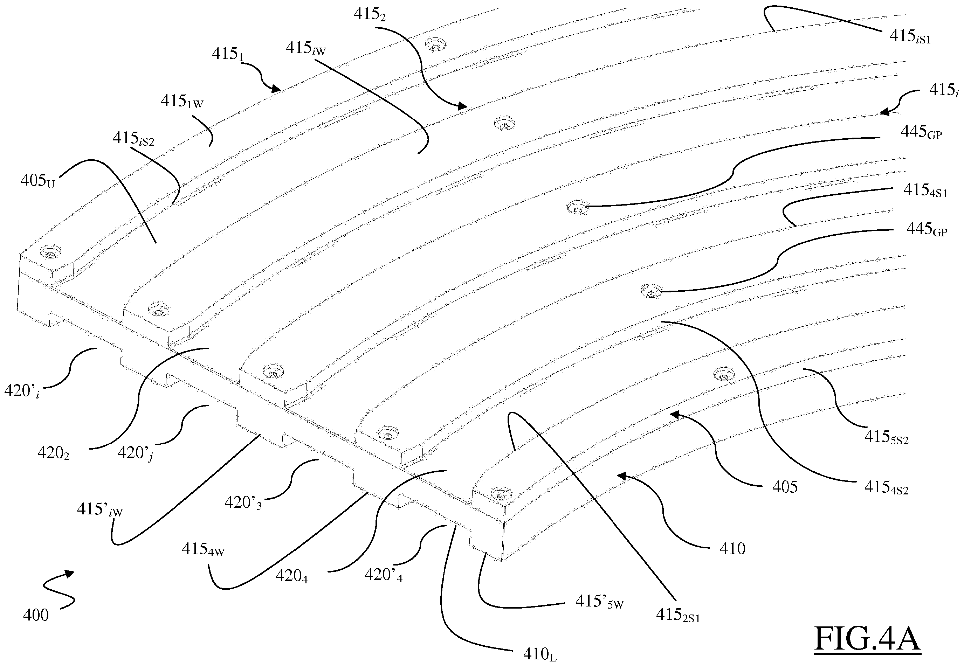

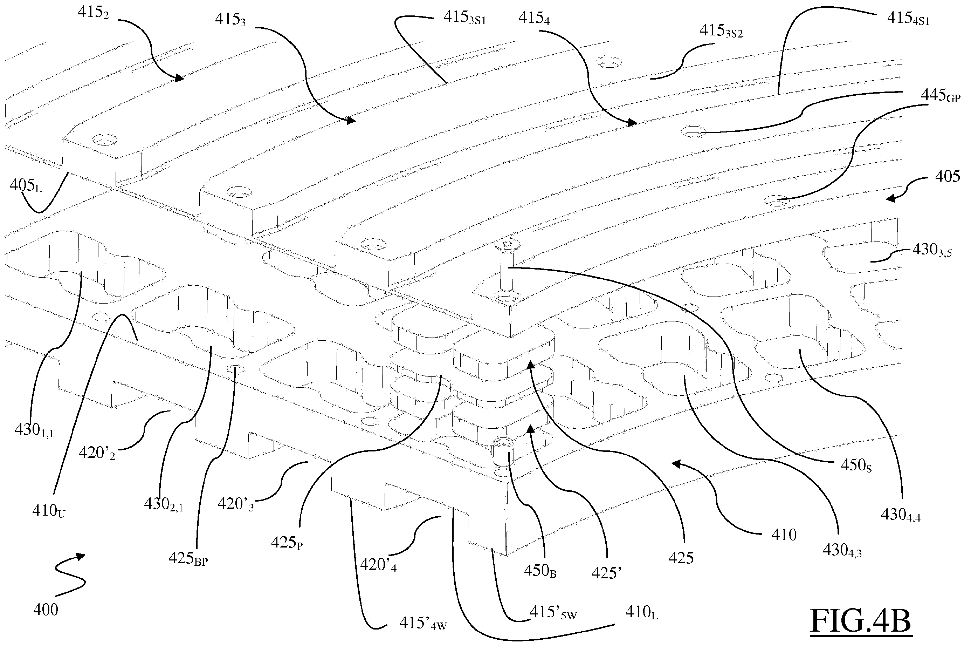

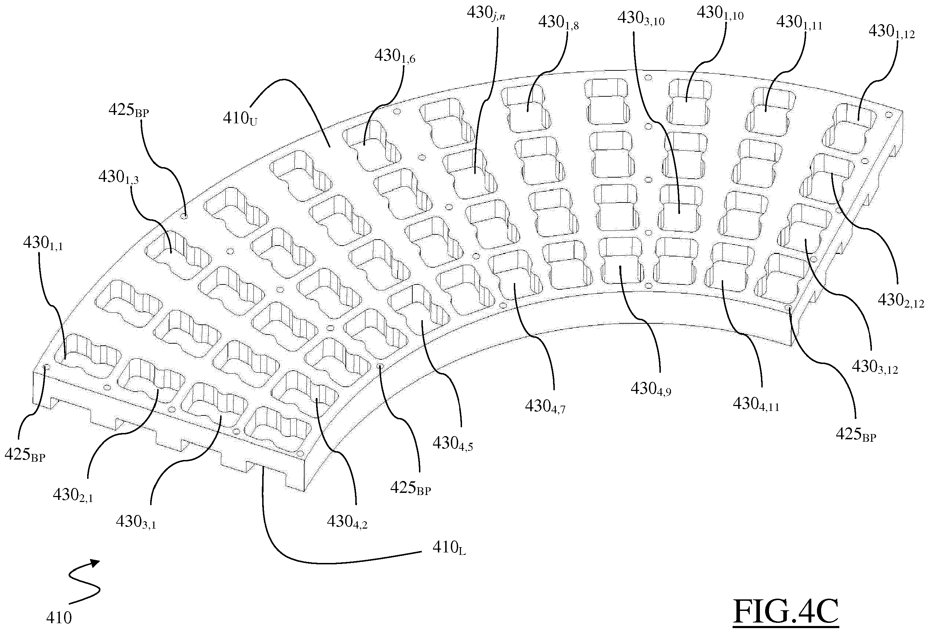

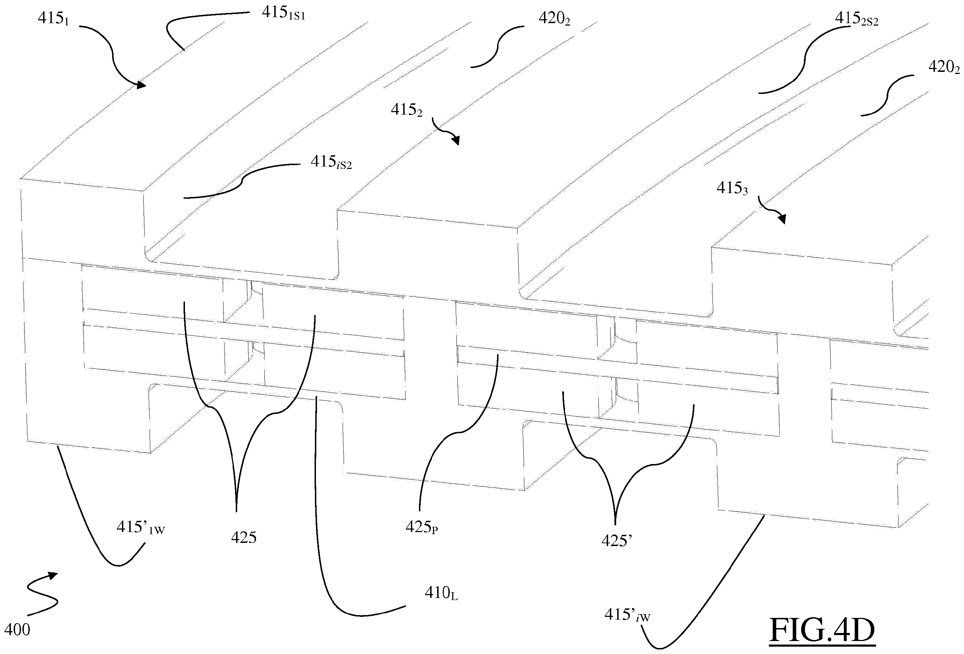

With reference now to **Figures 4A** and **4B****,** they show a perspective view and a perspective exploded view, respectively, of a forward and return guide structure **400** according to another embodiment of the present invention. For the sake of description ease, such figures will be discussed jointly with **Figure 4C****,** which shows a perspective view of a base portion of the forward and return guide structure **400,** and with **Figure 4D****,** which shows a perspective sectional view of the forward and return guide structure **400.**

The forward and return guide structure **400** comprises a guide portion **405** and a base portion **410.**

The guide portion **405** of the forward and return guide structure **400** is for example equivalent to the guide portion **105** of the forward guide structure **100,** whereas the base portion **410** of the forward and return guide structure **400** is similar to the base portion **210** of the return guide structure **200.**

In the following, elements of the guide portion **405** and of the base portion **410** that are equivalent to those of the guide portion **105** and of the base portion **210,** respectively, will not be discussed again (in any case, they are denoted in the figures by corresponding number references properly differentiated by the first digit). Moreover, all the embodiments, alternatives and considerations discussed in connection with the guide portion **105** and the base portion **210** are intended to apply mutatis mutandis to the guide portion **405** and the base portion **410,** respectively,

As visible in the figures, the guide portion **405** is fastened to the base portion **410** (with the upper surface **410u** of the base portion **410** that faces the lower surface **405_{L}** of the guide portion **405),** preferably by fastening means comprising, for example, metric screws **450s** adapted to be fitted into the through holes **445_{GP}** of the guide portion **405,** and threaded inserts (*e*.*g*., externally and/or internally threaded bushings) **445_{B}**, fitted into the holes **445_{BP}** of the base portion **410** for being coupled to the metric screws **450s.**

According to this embodiment, the base portion **410** comprises a number *I* of rails **415'*ᵢ*** (*i*=1, ..., *I*, with / ≥ 2), similar to the rails **215;** of the return guide structure **200,** but formed in a single piece with the base portion **410.** Similarly to rails **415*ᵢ*,** each rail **415'*ᵢ*** extends, along the vertical direction **Y,** from the lower surface **410_{L}** of the base portion **410** to a lowermost surface **415'_{*i*W}** of the base portion **410,** and each pair of rails **415';** delimits, along the transversal direction **Z,** a respective guide channel **420'*ⱼ***.

Preferably, each seat **430*_{j,n}*** advantageously extends from the upper surface **410u** of the base portion **410** towards the lower surface **410_{L}** of the base portion **410** in order to be accessible form above (since the guide portion **405** is, in this embodiment, the only removable component).

Preferably, as illustrated in **Figures 4B** and **4D****,** each seat **430*_{j,n}*** accommodates four magnets. More preferably, each seat **430*_{j,n}*** accommodates two pairs of magnets, namely a pair of magnets **425** for attracting the chains **C*_{H}*** downwards in the guide portion **405** (forward path) and a pair of magnets **425'** for attracting the chains **C*_{H}*** upwards in the guide channels **420'*ⱼ*** (return path). Even more preferably, each pair of magnets **425,425'** is magnetically coupled to a plate **425_{P}** in ferromagnetic material, preferably from opposite (*e.g*., top and bottom) sides thereof. In this way, each pair of magnets **425,425'** and the respective plate **425_{P}** in ferromagnetic material define two horseshoe magnets accommodated in a same seat **430*_{j,n}***.

## Claims

1. Guide structure **(100; 200; 300; 400)** for a chain (Cn) for an article conveyor, said guide structure comprising:
a guide portion **(105; 205; 305; 405)** for guiding the chain along a first direction **(X)** identifying a direction of movement of the chain, wherein the guide portion has a guide portion first surface **(105u; 205_{L}**; **305_{L}**; **305'u; 405u)** that, in use, faces the chain, and a guide portion second surface (**105_{L}; 205u; 305u; 305'_{L}**; **405_{L}**) opposite the guide portion first surface, and wherein the guide portion comprises at least two rails **(115;; 215;; 315;; 415';)** each one extending, along a second direction **(Y)** orthogonal to the first direction, from the guide portion first surface to a guide portion third surface **(115;w; 215;w; 315_{*i*W}; 415_{*i*W})** that, in use, faces the chain, each pair of rails delimiting, along a third direction **(Z)** orthogonal to the first and second directions, a respective guide channel **(120*ⱼ*; 220*ⱼ*; 320*ⱼ*; 420*ⱼ*)** for at least partly accommodating the chain, each guide channel having side walls formed by side walls **(115_{*i*S1},115_{*i*S2}; 215_{*i*S1},215_{*i*S2}; 315_{*i*S1},315_{*i*S2}; 415_{*i*S1},415_{*i*S2})** of said pair of rails and a bottom wall forming said first surface, and
a base portion **(110; 210; 310; 410)** for supporting the guide portion, the base portion having a base portion first surface **(110u; 210_{L}; 310_{L}; 410u)** that, in use, faces the guide portion second surface, and a base portion second surface **(110_{L}; 210u; 310u; 410_{L})** opposite said base portion first surface, wherein the base portion is made of a first material and the guide portion is made of a second material different from the first material, wherein the guide structure further comprises fastening means **(150_{S},150_{B}; 250_{S},250_{B}; 350_{S},350_{B}; 450_{S},450_{B};)** for fastening the guide portion and the base portion to each other at one or more of said at least two rails, **characterized in that** the guide portion comprises holes **(145_{GP}; 245_{GP}; 345_{GP}; 445_{GP})** extending, along the second direction, into the rails between the first and third surfaces of the guide portion, and wherein said fastening means is adapted to be fitted into said holes and into the base portion for allowing the guide portion to be fastened to the base portion, and **in that** the holes of the guide portion comprise through holes opening to both said first and third surfaces of the guide portion.

2. Guide structure **(100; 200; 300; 400)** according to claim 1, wherein the base portion comprises holes **(145_{BP}; 245_{BP}; 345_{BP}; 445_{BP})** extending into the base portion between the base portion first and second surfaces, wherein upon superposition of the guide portion second surface to the base portion first surface, holes of the guide portion match respective holes of the base portion, said fastening means being adapted to be fitted further into the holes of the base portion for allowing the guide portion to be fastened to the base portion.

3. Guide structure **(100; 200; 300; 400)** according to claim 1 or 2 when dependent on claim 3, wherein said holes of the base portion comprise through holes opening to both said first and second surfaces of the base portion.

4. Guide structure **(100; 200; 300; 400)** according to any of the preceding claims, wherein the base portion comprises at least one seat **(130*_{j,n}*; 230*_{j,n}*; 330*_{j,n}*; 430*_{j,n}*)** for housing magnetic interaction means **(125; 225; 325,325'; 425,425')** of the guide structure adapted in use to magnetically interact with magnetic interaction means of the chain to cause a magnetic attraction of the chain to the guide structure.

5. Guide structure **(200)** according to claim 4, wherein the guide structure is a return guide structure for guiding the chain along at least a portion of a return section of the conveyor path of the article conveyor, and wherein said at least one seat **(230*_{j,n}*)** extends from the base portion first surface (**210_{L}**) towards the base portion second surface **(210u),** and wherein upon fastening of the guide portion to the base portion said guide portion covering the at least one seat thereby preventing liquids, sludge and dirt from contacting the magnetic interaction means housed therein.

6. Guide structure **(200)** according to claim 5, wherein said magnetic interaction means of the guide structure comprises at least one pair of permanent magnets **(225)** magnetically coupled to a plate (**225_{P}**) in ferromagnetic material, each pair of permanent magnets and the respective plate in ferromagnetic material defining a horseshoe magnet.

7. Guide structure **(100)** according to claim 4, wherein the guide structure is a forward guide structure for guiding the chain along at least a portion of a forward section of the conveyor path of the article conveyor, and wherein said at least one seat (**130_{j,n}**) extends from the base portion second surface (**110_{L}**) towards the base portion first surface **(110u),** the guide structure further comprising at least one lid **(135*_{j,n}*),** preferably a removable lid, for closing the at least one seat thereby preventing liquids, sludge and dirt from contacting the magnetic interaction means housed therein and the magnetic interaction means housed therein from falling down.

8. Guide structure **(100)** according to claim 7, wherein said magnetic interaction means of the guide structure comprises at least one pair of permanent magnets **(125),** and wherein said lid is made of ferromagnetic material, each pair of permanent magnets and the lid of ferromagnetic material defining a horseshoe magnet.

9. Guide structure **(300)** according to any of the preceding claims,
wherein the guide structure further comprises a further guide portion **(305'),** preferably made of the second material, having a further guide portion first surface **(305'u)** that, in use, faces the chain, and a further guide portion second surface **(305'_{L})** opposite the further guide portion first surface, the further guide portion comprising at least two rails **(315'*ᵢ*)** each one extending, along the second direction, from the further guide portion first surface to a further guide portion third surface (**315'_{*i*W})** that, in use, faces the chain, and each pair of rails delimiting, along the third direction, a respective guide channel **(320*ⱼ*)** for at least partly accommodating the chain,
wherein the base portion is also arranged for supporting the further guide portion, the base portion second surface facing, in use, the further guide portion second surface,
and wherein the guide structure comprises further fastening means (**350'_{S},350'_{B}**) for fastening the further guide portion and the base portion to each other at said at least two rails of the further guide portion.

10. Guide structure **(400)** according to any of claims 1-8,
wherein the base portion comprises at least two further rails **(415'*ᵢ*)** each one extending, along the second direction, from the base portion second surface to a base portion third surface (**415'_{*i*W}**), each pair of rails delimiting, along the third direction, a respective guide channel **(420'*ⱼ*)** for at least partly accommodating the chain,
wherein said at least two further rails are formed in a single piece with the base portion,
and wherein the fastening means fasten the guide portion and the base portion to each other at said at least two rails of the guide portion and at said at least two further rails of the base portion.

11. Guide structure **(100; 200; 300; 400)** according to any of the preceding claims, wherein the second material has a coefficient of friction lower than the coefficient of friction of the first material, and/or a wear resistance higher than the wear resistance of the first material.

12. Guide structure **(100; 200; 300; 400)** according to any of the preceding claims, wherein the guide portion second surface **(105_{L}; 205u; 305u; 305'_{L}**; **405_{L}**) is a flat surface.

## Patentansprüche

1. Führungsstruktur (100; 200; 300; 400) für eine Kette (C*ₕ*) für einen Artikelförderer, wobei die Führungsstruktur Folgendes umfasst:
einen Führungsabschnitt (105; 205; 305; 405) zum Führen der Kette entlang einer ersten Richtung (X), die eine Bewegungsrichtung der Kette angibt, wobei der Führungsabschnitt eine erste Oberfläche des Führungsabschnitts (105u; 205_{L}; 305_{L}; 305_{U}; 405u), die im Gebrauch der Kette zugewandt ist, und eine zweite Oberfläche des Führungsabschnitts (105_{L}; 205_{U}; 305_{U}; 305'_{L}; 405_{L}) gegenüber der ersten Oberfläche des Führungsabschnitts aufweist, und wobei der Führungsabschnitt mindestens zwei Schienen (115*ᵢ*; 215*ᵢ*; 315*ᵢ*; 415'*ᵢ*) umfasst, die sich jeweils entlang einer zweiten Richtung (Y) orthogonal zu der ersten Richtung von der ersten Oberfläche des Führungsabschnitts zu einer dritten Oberfläche (115_{*i*W}; 215_{*i*W}; 315_{*i*W}; 415_{*i*W}) des Führungsabschnitts erstrecken, die im Gebrauch der Kette zugewandt ist, wobei jedes Schienenpaar entlang einer dritten Richtung (Z) orthogonal zu den ersten und zweiten Richtungen einen jeweiligen Führungskanal (120*ⱼ*; 220*ⱼ*; 320*ⱼ*; 420*ⱼ*) zur zumindest teilweisen Aufnahme der Kette begrenzt, wobei jeder Führungskanal Seitenwände aufweist, die von Seitenwänden (115_{*i*S1}, 115_{*i*S2}; 215_{*i*S1}, 215_{*i*S2}; 315_{*i*S1}, 315_{*i*S2}; 415_{*i*S1}, 415_{*i*S2}) des Schienenpaares und einer Bodenwand gebildet werden, die die erste Oberfläche bildet, und
einen Basisabschnitt (110; 210; 310; 410) zum Tragen des Führungsabschnitts, wobei der Basisabschnitt eine erste Oberfläche des Basisabschnitts (110u; 210_{L}; 310_{L}; 410_{U}), die im Gebrauch der zweiten Oberfläche des Führungsabschnitts zugewandt ist, und eine zweite Oberfläche des Basisabschnitts (110_{L}; 210_{U}; 310_{U}; 410_{L}) gegenüber der ersten Oberfläche des Basisabschnitts aufweist, wobei der Basisabschnitt aus einem ersten Material hergestellt ist und der Führungsabschnitt aus einem zweiten Material hergestellt ist, das sich von dem ersten Material unterscheidet, wobei die Führungsstruktur weiter Befestigungsmittel (150_{S},150_{B}; 250_{S},250_{B}; 350_{S},350_{B}; 450_{S},450_{B};) umfasst, um den Führungsabschnitt und den Basisabschnitt an einer oder mehreren der mindestens zwei Schienen aneinander zu befestigen, **dadurch gekennzeichnet, dass** der Führungsabschnitt Löcher (145_{GP}; 245_{GP}; 345_{GP}; 445_{GP}) umfasst, die sich entlang der zweiten Richtung in die Schienen zwischen der ersten und der dritten Oberfläche des Führungsabschnitts erstrecken, und wobei das Befestigungsmittel dazu angepasst ist, in die Löcher und in den Basisabschnitt eingebaut zu werden, um zu ermöglichen, dass der Führungsabschnitt an dem Basisabschnitt befestigt wird, und dadurch, dass die Löcher des Führungsabschnitts Durchgangslöcher umfassen, die sich sowohl zu der ersten als auch zu der dritten Oberfläche des Führungsabschnitts öffnen.

2. Führungsstruktur (100; 200; 300; 400) nach Anspruch 1, wobei der Basisabschnitt Löcher (145_{BP}; 245_{BP}; 345_{BP}; 445_{BP}) umfasst, die sich in den Basisabschnitt zwischen der ersten und der zweiten Oberfläche des Basisabschnitts erstrecken, wobei beim Übereinanderlegen der zweiten Oberfläche des Führungsabschnitts auf die erste Oberfläche des Basisabschnitts die Löcher des Führungsabschnitts mit den jeweiligen Löchern des Basisabschnitts übereinstimmen, wobei die Befestigungsmittel dazu angepasst sind, weiter in die Löcher des Basisabschnitts eingebaut zu werden, um zu ermöglichen, dass der Führungsabschnitt an dem Basisabschnitt befestigt wird.

3. Führungsstruktur (100; 200; 300; 400) nach Anspruch 1 oder 2 in Abhängigkeit von Anspruch 3, wobei die Löcher des Basisabschnitts Durchgangslöcher umfassen, die sich sowohl zu der ersten als auch zu der zweiten Oberfläche des Basisabschnitts öffnen.

4. Führungsstruktur (100; 200; 300; 400) nach einem der vorstehenden Ansprüche, wobei der Basisabschnitt mindestens einen Sitz (130*_{j,n}*; 230*_{j,n}*; 330*_{j,n}*; 430*_{j,n}*) zur Aufnahme von magnetischen Wechselwirkungsmitteln (125; 225; 325,325'; 425,425') der Führungsstruktur umfasst, die im Gebrauch dazu angepasst sind, mit magnetischen Wechselwirkungsmitteln der Kette magnetisch zu wechselwirken, um eine magnetische Anziehung der Kette zur Führungsstruktur zu bewirken.

5. Führungsstruktur (200) nach Anspruch 4, wobei die Führungsstruktur eine Rücklaufführungsstruktur zum Führen der Kette entlang mindestens eines Abschnitts eines Rücklaufabschnitts des Förderwegs des Artikelförderers ist, und wobei sich der mindestens eine Sitz (230*_{j,n}*) von der ersten Oberfläche (210_{L}) des Basisabschnitts in Richtung der zweiten Oberfläche (210u) des Basisabschnitts erstreckt, und wobei beim Befestigen des Führungsabschnitts an dem Basisabschnitt der Führungsabschnitt den mindestens einen Sitz abdeckt, wodurch verhindert wird, dass Flüssigkeiten, Schlamm und Schmutz mit den darin untergebrachten magnetischen Wechselwirkungsmitteln in Kontakt kommen.

6. Führungsstruktur (200) nach Anspruch 5, wobei das magnetische Wechselwirkungsmittel der Führungsstruktur mindestens ein Paar von Permanentmagneten (225) umfasst, die magnetisch mit einer Platte (225p) aus ferromagnetischem Material gekoppelt sind, wobei jedes Paar von Permanentmagneten und die jeweilige Platte aus ferromagnetischem Material einen Hufeisenmagneten definieren.

7. Führungsstruktur (100) nach Anspruch 4, wobei die Führungsstruktur eine Vorwärtsführungsstruktur zum Führen der Kette entlang mindestens eines Abschnitts eines Vorlaufabschnitts des Förderweges des Artikelförderers ist, und wobei sich der mindestens eine Sitz von der zweiten Oberfläche (110_{L}) des Bodenabschnitts zu der ersten Oberfläche (110u) des Bodenabschnitts erstreckt, wobei die Führungsstruktur weiter mindestens einen Deckel (135*_{j,n}*), vorzugsweise einen abnehmbaren Deckel, zum Verschließen des mindestens einen Sitzes umfasst, wodurch verhindert wird, dass Flüssigkeiten, Schlamm und Schmutz mit den darin untergebrachten magnetischen Wechselwirkungsmitteln in Kontakt kommen und die darin untergebrachten magnetischen Wechselwirkungsmittel herunterfallen.

8. Führungsstruktur (100) nach Anspruch 7, wobei das magnetische Wechselwirkungsmittel der Führungsstruktur mindestens ein Paar Permanentmagnete (125) umfasst, und wobei der Deckel aus ferromagnetischem Material hergestellt ist, wobei jedes Paar Permanentmagnete und der Deckel aus ferromagnetischem Material einen Hufeisenmagneten definieren.

9. Führungsstruktur (300) nach einem der vorstehenden Ansprüche,
wobei die Führungsstruktur weiter einen weiteren Führungsabschnitt (305') umfasst, der vorzugsweise aus dem zweiten Material hergestellt ist und eine erste Oberfläche (305'u) des weiteren Führungsabschnitts aufweist, die im Gebrauch der Kette zugewandt ist, sowie eine zweite Oberfläche (305'_{L}) des weiteren Führungsabschnitts, die der ersten Oberfläche des weiteren Führungsabschnitts gegenüberliegt, wobei der weitere Führungsabschnitt mindestens zwei Schienen (315'*ᵢ*) umfasst, die sich jeweils entlang der zweiten Richtung von der ersten Oberfläche des weiteren Führungsabschnitts zu einer dritten Oberfläche (315'iw) des weiteren Führungsabschnitts erstrecken, die im Gebrauch der Kette zugewandt ist, und wobei jedes Paar von Schienen entlang der dritten Richtung einen jeweiligen Führungskanal (320*ⱼ*) zur zumindest teilweisen Aufnahme der Kette begrenzt,
wobei der Basisabschnitt auch zum Tragen des weiteren Führungsabschnitts angeordnet ist, wobei die zweite Oberfläche des Basisabschnitts im Gebrauch der zweiten Oberfläche des weiteren Führungsabschnitts gegenüberliegt,
und wobei die Führungsstruktur weitere Befestigungsmittel (350's, 350'_{B}) zum Befestigen des weiteren Führungsabschnitts und des Basisabschnitts aneinander an den mindestens zwei Schienen des weiteren Führungsabschnitts umfasst.

10. Führungsstruktur (400) nach einem der Ansprüche 1 bis 8,
wobei der Basisabschnitt mindestens zwei weitere Schienen (415'*ᵢ*) umfasst, die sich jeweils entlang der zweiten Richtung von der zweiten Oberfläche des Basisabschnitts zu einer dritten Oberfläche (415'iw) des Basisabschnitts erstrecken, wobei jedes Paar von Schienen entlang der dritten Richtung einen jeweiligen Führungskanal (420'*ⱼ*) zur zumindest teilweisen Aufnahme der Kette begrenzt,
wobei die mindestens zwei weiteren Schienen in einem einzigen Stück mit dem Basisabschnitt ausgebildet sind,
und wobei die Befestigungsmittel den Führungsabschnitt und den Basisabschnitt an den mindestens zwei Schienen des Führungsabschnitts und an den mindestens zwei weiteren Schienen des Basisabschnitts aneinander befestigen.

11. Führungsstruktur (100; 200; 300; 400) nach einem der vorstehenden Ansprüche, wobei das zweite Material einen niedrigeren Reibungskoeffizienten als der Reibungskoeffizient des ersten Materials und/oder eine höhere Verschleißfestigkeit als die Verschleißfestigkeit des ersten Materials aufweist.

12. Führungsstruktur (100; 200; 300; 400) nach einem der vorstehenden Ansprüche, wobei die zweite Oberfläche des Führungsabschnitts (105_{L}; 205u; 305u; 305'_{L}; 405_{L}) eine ebene Oberfläche ist.

## Revendications

1. Structure de guidage **(100 ; 200 ; 300 ; 400)** pour une chaîne (**Cₕ**) destinée à un convoyeur d'articles, ladite structure de guidage comprenant :
une partie de guidage **(105 ; 205 ; 305 ; 405)** destinée à guider la chaîne le long d'une première direction **(X)** identifiant une direction de mouvement de la chaîne, la partie de guidage comportant une première surface de partie de guidage **(105_{U}** ; **205_{L}** ; **305_{L}** ; **305'_{U}** ; **405_{L}**) qui, lors de l'utilisation, fait face à la chaîne, et une deuxième surface de partie de guidage **(105_{U}** ; **205_{U}** ; **305_{U}** ; **305'_{L}** ; **405_{L}**) opposée à la première surface de partie de guidage, et la partie de guidage comprenant au moins deux rails **(115ᵢ ; 215ᵢ ; 315ᵢ ; 415'ᵢ)** s'étendant chacun, le long d'une deuxième direction **(Y)** orthogonale à la première direction, à partir de la première surface de partie de guidage à une troisième surface de portion de guidage **(115/w ; 215/w ; 315/w ; 415/w)** qui, lors de l'utilisation, fait face à la chaîne, chaque paire de rails délimitant, le long d'une troisième direction **(Z)** orthogonale aux première et deuxième directions, un canal de guidage respectif (**120ⱼ** ; **220ⱼ** ; **320ⱼ** ; **420ⱼ**) pour loger au moins partiellement la chaîne, chaque canal de guidage ayant des parois latérales formées par des parois latérales **(115_{/S1} ; 115_{/S2} ; 215_{/S1} ; 215_{/S2} ; 315_{/S1} ; 315_{/S2} ; 415_{/S1}; 415_{/S2})** de ladite paire de rails et une paroi inférieure formant ladite première surface, et
une partie de base **(110; 210; 310; 410)** pour supporter la partie de guidage, la partie de base ayant une première surface de partie de base **(110_{U}; 210_{L}; 310_{L}; 410_{U})** qui, lors de l'utilisation, fait face à la deuxième surface de partie de guidage, et une deuxième surface de partie de base **(110_{L}; 210_{U}; 310_{U}; 410_{L})** opposée à ladite première surface de partie de base, dans laquelle la partie de base est constituée d'un premier matériau et la partie de guidage est constituée d'un deuxième matériau différent du premier matériau, dans lequel la structure de guidage comprend en outre des moyens de fixation **(150_{S}, 150_{B}**; **250_{S}**, **250_{B}**; **350_{S}**, **350_{B}**; **450_{S}, 450_{B}**) pour fixer la partie de guidage et la partie de base l'une à l'autre au niveau d'un ou plusieurs desdites à l'au moins deux rails, **caractérisé en ce que** la partie de guidage comprend des trous **(145_{GP}** ; **245_{GP}** ; **345_{GP}** ; **445_{GP})** s'étendant, selon la deuxième direction, dans les rails entre les première et troisième surfaces de la partie de guidage, et dans lequel lesdits moyens de fixation sont adaptés pour être monté dans lesdits trous et dans la partie de base pour permettre à la partie de guidage d'être fixée à la partie de base, et **en ce que** les trous de la partie de guidage comprennent des trous traversants s'ouvrant à la fois sur lesdites première et troisième surfaces de la partie de guidage.

2. Structure de guidage **(100 ; 200 ; 300 ; 400)** selon la revendication 1, dans laquelle la partie de base comprend des trous (**145_{BP}** ; **245_{BP}** ; **345_{BP}** ; **445_{BP})** s'étendant dans la partie de base entre les première et deuxième surfaces de la partie de base, dans laquelle, lors de la superposition de la deuxième surface de la partie de guidage à la première surface de la partie de base, les trous de la partie de guidage correspondent aux trous respectifs de la partie de base, lesdits moyens de fixation étant conçus pour être insérés davantage dans les trous de la partie de base pour permettre à la partie de guidage d'être fixée à la partie de base.

3. Structure de guidage **(100 ; 200 ; 300 ; 400)** selon la revendication 1 ou 2 lorsqu'elle dépend de la revendication 3, dans laquelle lesdits trous de la partie de base comprennent des trous traversants s'ouvrant sur lesdites première et deuxième surfaces de la partie de base.

4. Structure de guidage **(100 ; 200 ; 300 ; 400)** selon l'une quelconque des revendications précédentes, dans laquelle la partie de base comprend au moins un siège **(130*_{j,n}*; 230*_{j,n}*; 330_{j,n};430_{j,n}**) pour loger des moyens d'interaction magnétique **(125 ; 225 ; 325, 325' ; 425, 425')** de la structure de guidage adaptés en utilisation pour interagir magnétiquement avec des moyens d'interaction magnétique de la chaîne pour provoquer une attraction magnétique de la chaîne vers la structure de guidage.

5. Structure de guidage **(200)** selon la revendication 4, dans laquelle la structure de guidage est une structure de guidage de retour pour guider la chaîne le long d'au moins une partie d'une section de retour du trajet de transport du convoyeur d'articles, et dans laquelle ledit au moins un siège (**230_{j,n}**) s'étend de la première surface **(210)** de la partie de base vers la deuxième surface (**210ᵤ)** de la partie de base, et dans laquelle lors de la fixation de la partie de guidage à la partie de base, ladite partie de guidage recouvre ledit au moins un siège empêchant ainsi les liquides, la boue et la saleté d'entrer en contact avec les moyens d'interaction magnétique logés à l'intérieur de celle-ci.

6. Structure de guidage **(200)** selon la revendication 5, dans laquelle lesdits moyens d'interaction magnétique de la structure de guidage comprennent au moins une paire d'aimants permanents **(225)** couplés magnétiquement à une plaque **(225ᵣ)** en matériau ferromagnétique, chaque paire d'aimants permanents et la plaque respective en matériau ferromagnétique définissant un aimant en fer à cheval.

7. Structure de guidage **(100)** selon la revendication 4, dans laquelle la structure de guidage est une structure de guidage avant destinée à guider la chaîne le long d'au moins une partie d'une section avant du trajet de convoyeur du convoyeur d'articles, et dans laquelle ledit au moins un siège **(130_{j,n})** s'étend de la deuxième surface de la partie de base (**110_{L}**) vers la première surface de la partie de base **(110u),** la structure de guidage comprenant en outre au moins un couvercle **(135_{j*,*n}),** de préférence un couvercle amovible, destiné à fermer ledit au moins un siège, empêchant ainsi les liquides, la boue et la saleté d'entrer en contact avec les moyens d'interaction magnétique logés à l'intérieur de celle-ci et les moyens d'interaction magnétique logés à l'intérieur de celle-ci de tomber.

8. Structure de guidage **(100)** selon la revendication 7, dans laquelle lesdits moyens d'interaction magnétique de la structure de guidage comprennent au moins une paire d'aimants permanents **(125),** et dans laquelle ledit couvercle est réalisé en matériau ferromagnétique, chaque paire d'aimants permanents et le couvercle en matériau ferromagnétique définissant un aimant en fer à cheval.

9. Structure de guidage **(300)** selon l'une quelconque des revendications précédentes,
dans laquelle la structure de guidage comprend en outre une autre partie de guidage **(305'),** de préférence constituée du deuxième matériau, ayant une première surface de partie de guidage supplémentaire **(305'_{U})** qui, lors de l'utilisation, fait face à la chaîne, et une deuxième surface de partie de guidage supplémentaire **(305'_{L})** opposée à la première surface de partie de guidage supplémentaire, l'autre partie de guidage comprenant au moins deux rails **(315'ᵢ)** s'étendant chacun, le long de la deuxième direction, de la première surface de partie de guidage supplémentaire à une troisième surface de partie de guidage supplémentaire **(315'_{iw})** qui, lors de l'utilisation, fait face à la chaîne, et chaque paire de rails délimitant, le long de la troisième direction, un canal de guidage respectif **(320ⱼ)** pour loger au moins partiellement la chaîne,
dans laquelle la partie de base est également agencée pour supporter l'autre partie de guidage, la deuxième surface de partie de base faisant face, lors de l'utilisation, à la deuxième surface de partie de guidage supplémentaire,
et dans laquelle la structure de guidage comprend d'autres moyens de fixation **(350'_{S}, 350'_{B}**) pour fixer l'autre partie de guidage et la partie de base l'une à l'autre au niveau desdits au moins deux rails de l'autre partie de guidage.

10. Structure de guidage **(400)** selon l'une quelconque des revendications 1 à 8, dans laquelle la partie de base comprend au moins deux autres rails **(415'ᵢ)** s'étendant chacun, le long de la deuxième direction, de la deuxième surface de la partie de base à une troisième surface (**415'_{/W}**) de la partie de base, chaque paire de rails délimitant, le long de la troisième direction, un canal de guidage respectif (**420'ⱼ**) pour loger au moins partiellement la chaîne,
dans laquelle lesdits au moins deux autres rails sont formés d'une seule pièce avec la partie de base, et dans laquelle les moyens de fixation fixent la partie de guidage et la partie de base l'une à l'autre au niveau desdits au moins deux rails de la partie de guidage et au niveau desdits au moins deux autres rails de la partie de base.

11. Structure de guidage **(100 ; 200 ; 300 ; 400)** selon l'une quelconque des revendications précédentes, dans laquelle le deuxième matériau présente un coefficient de frottement inférieur au coefficient de frottement du premier matériau, et/ou une résistance à l'usure supérieure à la résistance à l'usure du premier matériau.

12. Structure de guidage **(100 ; 200 ; 300 ; 400)** selon l'une quelconque des revendications précédentes, dans laquelle la deuxième surface **(105_{U}** ; **205_{U}** ; **305_{L}** ; **305'_{L}** ; **405_{L}**) de la partie de guidage est une surface plane.
